(19) **Europäisches Patentamt / European Patent Office / Office européen des brevets**

(11) **EP 4 753 259 A1**

(12) **EUROPEAN PATENT APPLICATION**
published in accordance with Art. 153(4) EPC

(43) Date of publication:
03.06.2026 Bulletin 2026/23

(21) Application number: 24860285.6

(22) Date of filing: 20.08.2024

(51) International Patent Classification (IPC):
H04N 19/124 (2014.01)  H04N 19/196 (2014.01)
H04N 19/70 (2014.01)  H04N 19/132 (2014.01)
G06N 3/045 (2023.01)  G06N 3/08 (2023.01)

(52) Cooperative Patent Classification (CPC):
G06N 3/045; G06N 3/08; H04N 19/124;
H04N 19/132; H04N 19/196; H04N 19/70

(86) International application number:
PCT/KR2024/012351

(87) International publication number:
WO 2025/048364 (06.03.2025 Gazette 2025/10)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 01.09.2023 KR 20230116269

(71) Applicant: Samsung Electronics Co., Ltd.
Suwon-si, Gyeonggi-do 16677 (KR)

(72) Inventors:
• DINH, Quockhanh
  Suwon-si, Gyeonggi-do 16677 (KR)
• PARK, Minwoo
  Suwon-si, Gyeonggi-do 16677 (KR)
• CHOI, Kwangpyo
  Suwon-si, Gyeonggi-do 16677 (KR)
• PIAO, Yinji
  Suwon-si, Gyeonggi-do 16677 (KR)

(74) Representative: Appleyard Lees IP LLP
G Mill
Dean Clough Industrial Park
Halifax HX3 5AH (GB)

(54) **IMAGE DECODING DEVICE, IMAGE DECODING METHOD, IMAGE ENCODING DEVICE AND IMAGE ENCODING METHOD FOR OPTIMIZED QUANTIZATION AND DEQUANTIZATION**

(57) Provided are an image decoding method and device comprising: acquiring, from a bitstream, second feature data for first feature data acquired through neural network-based encoding for the current image and a quantization index indicating one of a plurality of quantization steps; acquiring the quantization step on the basis of the quantization index; acquiring probability data by applying the second feature data to a first neural network; modifying the probability data on the basis of the quantization step; acquiring quantized first feature data by applying entropy decoding based on the modified probability data to bits included in the bitstream; acquiring dequantized first feature data by dequantizing the quantized first feature data according to the quantization step; and reconstructing the current image through neural network-based decoding for the dequantized first feature data.

FIG. 17

START

OBTAIN SECOND FEATURE DATA FOR FIRST FEATURE DATA OBTAINED THROUGH NEURAL NETWORK BASED ENCODING OF CURRENT IMAGE AND QUANTIZATION INDEX INDICATING ONE OF PLURALITY OF QUANTIZATION STEPS FROM BITSTREAM — S1710

OBTAIN QUANTIZATION STEP BASED ON QUANTIZATION INDEX — S1720

OBTAIN PROBABILITY DATA BY APPLYING SECOND FEATURE DATA TO FIRST NEURAL NETWORK — S1730

MODIFY PROBABILITY DATA BASED ON QUANTIZATION STEP — S1740

OBTAIN QUANTIZED FIRST FEATURE DATA BY APPLYING ENTROPY DECODING BASED ON MODIFIED PROBABILITY DATA TO BITS INCLUDED IN BITSTREAM — S1750

OBTAIN DEQUANTIZED FIRST FEATURE DATA BY DEQUANTIZING QUANTIZED FIRST FEATURE DATA ACCORDING TO QUANTIZATION STEP — S1760

RESTORE CURRENT IMAGE THROUGH NEURAL NETWORK BASED DECODING OF DEQUANTIZED FIRST FEATURE DATA — S1770

END

EP 4 753 259 A1

## Description

### Technical Field

The disclosure relates to image encoding and decoding. More specifically, the disclosure relates to a technology for encoding and decoding an image by using artificial intelligence (AI), e.g., a neural network.

### Background Art

Codecs such as H.264 advanced video coding (AVC) and high efficiency video coding (HEVC) may divide an image into blocks and perform predictive encoding and predictive decoding on each block through inter prediction or intra prediction.

Intra prediction is a method of compressing images by removing spatial redundancy in the images, and inter prediction is a method of compressing images by removing temporal redundancy between the images.

There is motion estimation encoding as a representative example of inter prediction. In motion estimation encoding, blocks of the current image are predicted by using a reference image. A certain evaluation function may be used to search a certain range for a reference block most similar to a current block. The current block is predicted based on the reference block, and a predicted block generated as the prediction result is subtracted from the current block to generate and encode a residual block.

To derive a motion vector that indicates the reference block in a reference image, a motion vector of previously encoded blocks may be used as a motion vector predictor of the current block. A differential motion vector, which is a difference between the motion vector of the current block and the motion vector predictor, is signaled to a decoder in a certain method.

Technologies for encoding/decoding images by using artificial intelligence (AI) have recently been suggested, and there is a need for a scheme for effectively encoding/decoding images by using the AI, e.g., a neural network.

### Disclosure of Invention

### Solution to Problem

According to an embodiment of the present disclosure, an image decoding method may include obtaining second feature data for first feature data obtained through neural network based encoding for a current image and a quantization index indicating one of a plurality of quantization steps from a bitstream; obtaining the quantization step based on the quantization index; obtaining probability data by applying the second feature data to a first neural network; modifying the probability data based on the quantization step; obtaining quantized first feature data by applying entropy decoding based on the modified probability data to bits included in the bitstream; obtaining dequantized first feature data by dequantizing the quantized first feature data according to the quantization step; and restoring the current image by neural network based decoding of the dequantized first feature data.

According to an embodiment of the present disclosure, an image decoding device may include an obtainer configured to obtain second feature data for first feature data obtained through neural network based encoding for a current image and a quantization index indicating one of a plurality of quantization steps from a bitstream.

In an embodiment of the present disclosure, the obtainer may include an AI controller configured to obtain the quantization step based on the quantization index, obtain probability data by applying the second feature data to a first neural network, and modify the probability data based on the quantization step.

In an embodiment of the present disclosure, the obtainer may include an entropy decoder configured to obtain quantized first feature data by applying entropy decoding based on the modified probability data to bits included in the bitstream.

In an embodiment of the present disclosure, the obtainer may include a dequantizer configured to obtain dequantized first feature data by dequantizing the quantized first feature data according to the quantization step.

In an embodiment of the present disclosure, the image decoding device may include a predictive decoder configured to restore the current image by neural network based decoding of the dequantized first feature data.

According to an embodiment of the present disclosure, an image encoding method may include obtaining second feature data for first feature data obtained through neural network based encoding of a current image by applying the first feature data to a first neural network; obtaining probability data by applying the second feature data to a second neural network; modifying the probability data based on one of a plurality of predetermined quantization steps; obtaining quantized first feature data by quantizing the first feature data according to the quantization step; and generating a bitstream including bits corresponding to the quantized first feature data and the quantization index by applying entropy decoding based on the modified probability data for the quantized first feature data and applying entropy encoding to the quantization index corresponding to the quantization step.

In an embodiment of the present disclosure, the bitstream may include bits corresponding to the second feature data.

According to an embodiment of the present disclosure, an image encoding device may include a predictive encoder configured to obtain first feature data by neural network based encoding of a current image.

In an embodiment of the present disclosure, the image encoding device may include a generator configured to generate a bitstream.

In an embodiment of the present disclosure, the generator may include an AI controller configured to obtain the second feature data for the first feature data by applying the first feature data to a first neural network, obtain probability data by applying the second feature data to a second neural network, and modify the probability data based on one of a plurality of predetermined quantization steps.

In an embodiment of the present disclosure, the generator may include a quantizer configured to obtain quantized first feature data by quantizing the first feature data according to the quantization step.

In an embodiment of the present disclosure, the generator may include an entropy encoder configured to generate a bitstream including bits corresponding to quantized first feature data and a quantization index by applying entropy decoding based on the modified probability data for the quantized first feature data and applying entropy encoding to the quantization index corresponding to the quantization step.

**Brief Description of Drawings**

FIG. 1 is a diagram for describing encoding and decoding procedures for a current image based on intra prediction, according to an embodiment of the present disclosure.

FIG. 2 is a diagram for describing encoding and decoding procedures for a current image based on inter prediction, according to an embodiment of the present disclosure.

FIG. 3 is a diagram for describing a method of obtaining probability data used for entropy encoding and entropy decoding, according to an embodiment of the present disclosure.

FIG. 4 is a diagram for describing a method of obtaining quantized data used for quantization and dequantization, and modified probability data used for entropy encoding and entropy decoding, according to an embodiment of the present disclosure.

FIG. 5 is a diagram for describing a method of obtaining a quantization step determined by a quantization index used for quantization and dequantization, and modified probability data used for entropy encoding and entropy decoding, according to an embodiment of the present disclosure.

FIG. 6 is a diagram for describing a method of obtaining a quantization step determined by quantized data and a quantization index used for quantization and dequantization, and modified probability data used for entropy encoding and entropy decoding, according to an embodiment of the present disclosure.

FIG. 7 illustrates a structure of a neural network, according to an embodiment of the present disclosure.

FIG. 8 is a diagram for describing a method of modifying probability data, according to an embodiment of the present disclosure.

FIG. 9 is a diagram for describing probability data, modified probability data and a probability model, according to an embodiment of the present disclosure.

FIG. 10 is a diagram for describing a method of modifying a plurality of probability data, according to an embodiment of the present disclosure.

FIG. 11 is a diagram for describing probability data, modified probability data and a probability model, according to an embodiment of the present disclosure.

FIG. 12 illustrates a configuration of an image decoding device, according to an embodiment of the present disclosure.

FIG. 13 illustrates a configuration of an obtainer, according to an embodiment of the present disclosure.

FIG. 14 is a diagram for describing operation of an AI controller, according to an embodiment of the present disclosure.

FIG. 15 illustrates a configuration of an obtainer, according to an embodiment of the present disclosure.

FIG. 16 is a diagram for describing an operation of an AI controller, according to an embodiment of the present disclosure.

FIG. 17 is a diagram for describing an image decoding method, according to an embodiment of the present disclosure.

FIG. 18 illustrates a configuration of an image encoding device, according to an embodiment of the present disclosure.

FIG. 19 illustrates a configuration of a generator, according to an embodiment of the present disclosure.

FIG. 20 is a diagram for describing an operation of an AI controller, according to an embodiment of the present disclosure.

FIG. 21 illustrates a configuration of a generator, according to an embodiment of the present disclosure.

FIG. 22 is a diagram for describing operation of an AI controller, according to an embodiment of the present disclosure.

FIG. 23 is a diagram for describing an image encoding method, according to an embodiment of the present disclosure.

FIG. 24 is a diagram for describing a method of training neural networks, according to an embodiment of the present disclosure.

FIG. 25 is a diagram for describing a method of training neural networks, according to an embodiment of the present disclosure.

**Mode for the Invention**

Various modifications may be made to embodiments of the disclosure, which will be described more fully hereinafter with reference to the accompanying drawings. The disclosure is not limited to particular embodiments but may include all the modifications, equivalents and replacements which belong to technical scope and ideas of the disclosure.

Some related well-known technologies that possibly obscure the disclosure will not be described. Ordinal numbers (e.g., first, second, etc.) as herein used are to distinguish components from one another.

Throughout the disclosure, the expression "at least one of a, b or c" indicates only a, only b, only c, both a and b, both a and c, both b and c, all of a, b, and c, or variations thereof.

When the term "connected" or "coupled" is used, it means that a component may be directly connected or coupled to another component. However, unless otherwise defined, it is also understood that the component may be indirectly connected or coupled to the other component via another new component.

Throughout the specification, a component expressed with "~ unit", "~module", or the like may be a combination of two or more components or may be divided by function into two or more. Each of the components may perform its major function and further perform part or all of a function served by another component. In this way part of a major function served by each component may be dedicated and performed by another component.

A processor may include various processing circuits and/or a plurality of processors. For example, the term 'processor' as used herein including claims may include various processing circuits including at least one processor. One or more of the at least one processor may be configured to individually and/or collectively perform various functions, in a distributed fashion as described herein. As used herein, the processor, at least one processor or one or more processors may be configured to perform various functions. However, these terms cover, without limitation, a situation in which one processor performs some of the functions while other processor(s) perform some other functions, and a situation in which a single processor may perform all the functions. Furthermore, the at least one processor may include a combination of processors that perform the disclosed various functions in a distributed fashion. The at least one processor may execute program instructions to fulfill or perform various functions.

In the disclosure, the term "image" may indicate a still image, a picture, a frame, a moving image or video comprised of a plurality of successive still images.

In the disclosure, a neural network is a typical example of an artificial neural network model that simulates the cranial nerves, and is not limited to an artificial neural network model that employs a particular algorithm. The neural network may refer to a deep neural network.

In the disclosure, the term "parameter" is a value used in an operation process on each layer that makes up the neural network, which may be used, for example, when an input value is applied to a certain operation expression. The parameter is a value set as a result of training, which may be updated with extra training data as needed.

In the disclosure, the term "feature data" may refer to data obtained by processing input data by a neural network or a neural network based encoder. The feature data may be one dimensional (1D) or two dimensional (2D) data that includes multiple samples. The feature data may also be referred to as a latent representation. The feature data may represent a latent feature in data output by a neural network based decoder.

In the disclosure, a current image refers to an image that is a current subject of processing, and a previous image refers to an image that is a subject of processing before the current image. The current image or previous image may also be a block divided from the current image or previous image.

In the disclosure, the term "sample" refers to data allocated to a sampling position in 1D or 2D data such as an image, feature data, probability data or quantized data, and is a subject of processing. For example, the sample may include a pixel in a 2D image. The term "2D data" may also be referred to as a map.

An AI based end-to-end encoding/decoding system may be understood as a system that uses a neural network in an image encoding and decoding procedures.

Like codecs such as high efficiency video coding (HEVC), versatile video coding (VVC), etc., the AI based end-to-end encoding/decoding system may use intra prediction or inter prediction for image encoding and decoding.

As mentioned above, the intra prediction is a method of compressing images by removing spatial redundancy in the images, and the inter prediction is a method of compressing images by removing temporal redundancy between the images.

In an embodiment of the present disclosure, the intra prediction may be applied to the first of multiple frames, a frame that becomes a random access point, and a frame in which a scene change occurs.

In an embodiment of the present disclosure, the inter prediction may be applied to frames subsequent to the frame, to which the intra prediction is applied, among the multiple frames.

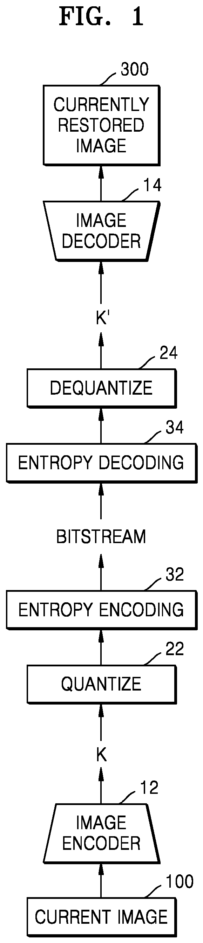

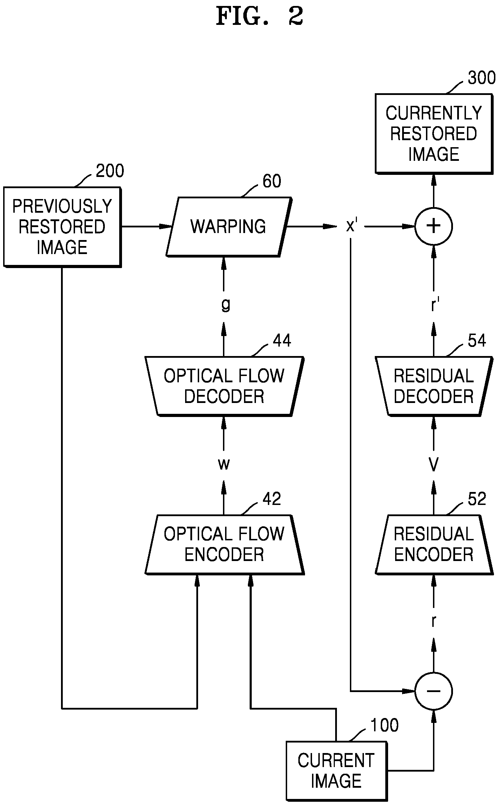

Referring to FIGS. 1 and 2, the intra prediction and the inter prediction performed by the AI based end-to-end encoding/decoding system according to an embodiment of the present disclosure will be described.

FIG. 1 is a diagram for describing encoding and decoding procedures for a current image based on intra prediction, according to an embodiment of the present disclosure.

In intra prediction, an image encoder 12 and an image decoder 14 may be used. The image encoder 12 and the image decoder 14 may be implemented by a neural network.

The image encoder 12 may output feature data k of a current image 100 by processing the current image 100 according to parameters configured by training.

A bitstream is generated by applying quantization 22 and entropy encoding 32 to the feature data k of the current image 100, and the bitstream may be forwarded to an image decoding device from an image encoding device.

Entropy decoding 34 and dequantization 24 are applied to the bitstream to obtain restored feature data k', and the restored feature data k' may be input to the image decoder 14.

The image decoder 14 may process the feature data k' according to parameters configured by training to output a currently restored image 300.

In the intra prediction, a spatial feature in the current image 100 is taken into account, so unlike inter prediction as shown in FIG. 2, only the current image 100 may be input to the image encoder 12.

FIG. 2 is a diagram for describing encoding and decoding procedures for a current image based on inter prediction, according to an embodiment of the present disclosure.

In inter prediction, an optical flow encoder 42, an optical flow decoder 44, a residual encoder 52 and a residual decoder 54 may be used.

The optical flow encoder 42, the optical flow decoder 44, the residual encoder 52 and the residual decoder 54 may be implemented by neural networks.

The optical flow encoder 42 and the optical flow decoder 44 may be understood as neural networks for extracting an optical flow g from the current image 100 and a previously restored image 200.

The residual encoder 52 and the residual decoder 54 may be understood as neural networks for encoding and decoding a residual image r.

As described above, the inter prediction is a procedure for encoding and decoding the current image 100 by using temporal redundancy between the current image 100 and the previously restored image 200. The previously restored image 200 may be an image obtained by decoding a previous image that has been a subject of processing before the current image 100 is processed.

A difference in position (or a motion vector) between blocks or samples in the current image 100 and reference blocks or reference samples in the previously restored image 200 may be used for encoding and decoding the current image 100. The difference in position may also be referred to as an optical flow. The optical flow may be defined as a set of motion vectors corresponding to the samples or blocks in the image.

The optical flow g may represent how the positions of samples in the previously restored image 200 have changed in the current image 100, or where identical/similar samples to the samples in the current image 100 are located in the previously restored image 200.

For example, when a sample that is identical or the most similar to a sample located at (1, 1) in the current image 100 is located at (2, 1) in the previously restored image 200, the optical flow g or motion vector of the sample may be derived as (1 (=2-1), 0 (=1-1)).

To encode the current image 100, the previously restored image 200 and the current image 100 may be input to the optical flow encoder 42.

The optical flow encoder 42 may process the current image 100 and the previously restored image 200 according to parameters configured as a result of training to output feature data w of the optical flow g.

As described in connection with FIG. 1, a bitstream is generated by applying the quantization 22 and the entropy encoding 32 to the feature data w of the optical flow g, and the feature data w of the optical flow g may be restored by applying the entropy decoding 34 and the dequantization 24 to the bitstream.

The feature data w of the optical flow g may be input to the optical flow decoder 44. The optical flow decoder 44 may process the input feature data w according to parameters configured as a result of training to output the optical flow g.

The previously restored image 200 may be warped by warping 60 based on the optical flow g, and as a result of the warping 60, a currently predictive image x' may be obtained. The warping 60 is a type of geometric transformation that shifts positions of samples in an image.

According to the optical flow g that represents relative positional relationships between the samples in the previously restored image 200 and the samples in the current image 100, the warping 60 may be applied to the previously restored image 200, to obtain the currently predictive image x' that is similar to the current image 100.

For example, when a sample located at (1, 1) in the previously restored image 200 is the most similar to a sample located at (2, 1) in the current image 100, the sample located at (1, 1) in the previously restored image 200 may be shifted to (2, 1) through the warping 60.

As the currently predictive image x' generated from the previously restored image 200 is not the current image 100 itself, a residual image r between the currently predictive image x' and the current image 100 may be obtained.

For example, the residual image r may be obtained by subtracting sample values in the currently predictive image x' from sample values in the current image 100.

The residual image r may be input to the residual encoder 52. The residual encoder 52 may process the residual image r according to parameters configured as a result of training to output feature data v of the residual image r.

As described in connection with FIG. 1, a bitstream is generated by applying the quantization 22 and the entropy encoding 32 to the feature data v of the residual image r, and the feature data v of the residual image r may be restored by applying the entropy decoding 34 and the dequantization 24 to the bitstream.

The feature data v of the residual image r may be input to the residual decoder 54. The residual decoder 54 may process the input feature data v according to parameters configured as a result of training to output a restored residual image r'.

The currently restored image 300 may be obtained by combining the currently predictive image x' and the restored residual image r'.

In the meantime, as described above, for the feature data k of the current image 100, the feature data w of the optical flow g and the feature data v of the residual image r, the entropy encoding 32 and the entropy decoding 34 may be applied. Entropy coding is an encoding method that varies average length of a code that represents a symbol according to a probability of the symbol, so probabilities of values that samples of first feature data may have may be required for the entropy encoding 32 and entropy decoding 34 of the first feature data.

In an embodiment of the present disclosure, to improve efficiency of the entropy encoding 32/entropy decoding 34 of at least one (hereinafter, the first feature data) of the feature data k of the current image 100, the feature data w of the optical flow g, or the feature data v of the residual image r, probability data may be obtained on a neural network basis.

The probability data is 1D or 2D data, and a sample of the probability data may represent a probability of a value that a sample of the first feature data may have.

In an embodiment of the present disclosure, probabilities of values that the samples of the first feature data may have may be derived by applying the sample values of the probability data to a predetermined probability model (e.g., Laplacian probability model or Gaussian probability model).

In an embodiment of the present disclosure, the probability data may include means and standard deviations (or variances) corresponding to the samples of the first feature data as sample values.

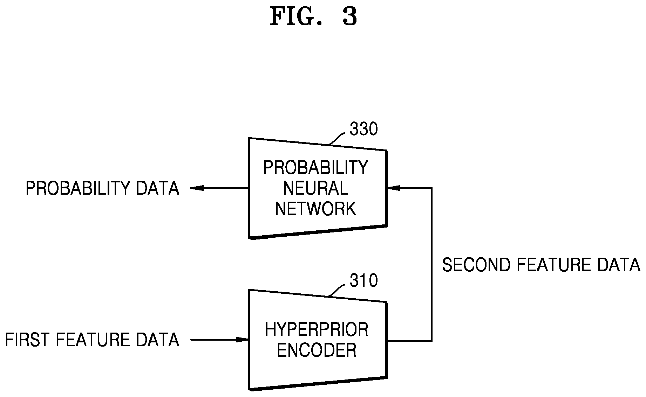

A method of obtaining the probability data by using a neural network will be described with reference to FIG. 3.

FIG. 3 is a diagram for describing a method of obtaining probability data used for entropy encoding and entropy decoding, according to an embodiment of the present disclosure.

To obtain the probability data used for the entropy encoding 32/entropy decoding 34, a hyperprior encoder 310 and a probability neural network 330 may be used.

The hyperprior encoder 310 may be a neural network for obtaining feature data from another feature data.

Referring to FIG. 3, the first feature data may be input to the hyperprior encoder 310, and the hyperprior encoder 310 may process the first feature data according to parameters configured as a result of training to output second feature data.

The second feature data may represent a latent feature in the first feature data, and may thus be referred to as hyperprior feature data.

The second feature data may be input to the probability neural network 330, and the probability neural network 330 may process the second feature data according to parameters configured as a result of training to output probability data.

The probability data may be used in the entropy encoding 32 and the entropy decoding 34 as described in connection with FIGS. 1 and 2.

In an embodiment of the present disclosure, in an encoding procedure for the current image 100, a bitstream may be obtained by applying the entropy encoding 32 based on the probability data to at least one of quantized first feature data, e.g., quantized feature data of the current image 100, quantized feature data of the optical flow g or quantized feature data of the residual image r.

In an embodiment of the present disclosure, in a decoding procedure for the current image 100, at least one of quantized first feature data, e.g., quantized feature data of the current image 100, quantized feature data of the optical flow g or quantized feature data of the residual image r may be obtained by applying the entropy decoding 34 based on the probability data to bits included in the bitstream.

The procedure for obtaining the probability data as shown in FIG. 3 may be useful for an occasion when the quantization 22 and the dequantization 24 for the first feature data are performed uniformly. This is because the probability data obtained from the second feature data that represents a latent feature in the first feature data may be equally applied to the quantized first feature data.

That the quantization 22 and the dequantization 24 are uniformly performed may mean that both quantization step sizes used for the quantization 22 and the dequantization 24 of the samples of the first feature data are the same. For example, when the quantization step size is 2, the first feature data may be quantized by dividing all the sample values of the first feature data by 2 and rounding the resultant values. Furthermore, the quantized first feature data may be dequantized by multiplying all the sample values of the quantized first feature data by 2.

When the quantization 22 is performed based on one quantization step size, a distribution of the sample values of the first feature data before quantization 22 may be maintained similarly even for the first feature data after quantization 22. This is because all the sample values of the first feature data are divided based on the same value and then rounded. In other words, as the distribution of the sample values of the first feature data before the quantization 22 remains the same as for the first feature data after the quantization 22, the probability data obtained from the second feature data may be applied as is even to the quantized first feature data.

Uniform quantization and uniform dequantization may be useful for an occasion when the sample values of the first feature data follow a Laplacian distribution. However, as the distribution of the sample values of the first feature data may vary depending on the feature of the image, there may be some limitations on uniform quantization and uniform dequantization.

In an embodiment of the present disclosure, efficiency of the quantization 22 and the dequantization 24 may be improved by obtaining data related to the quantization 22, e.g., a quantization step size, on a neural network basis from the hyperprior feature data of the first feature data that is subject to the quantization 22.

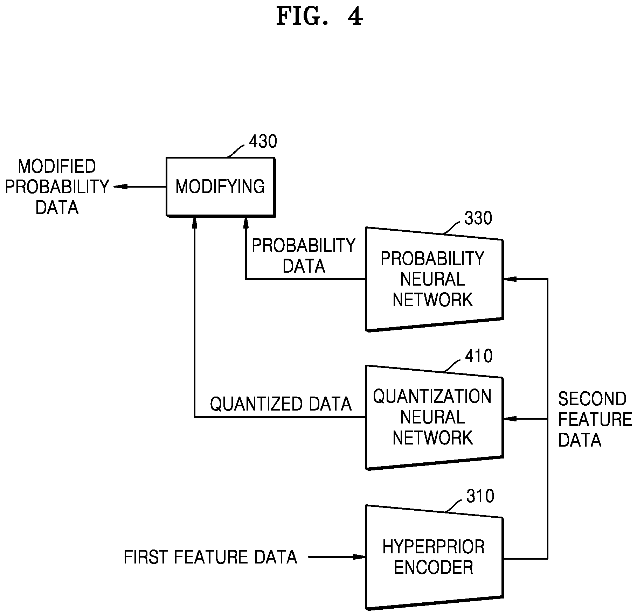

FIG. 4 is a diagram for describing a method of obtaining quantized data used for quantization and dequantization, and modified probability data used for entropy encoding and entropy decoding, according to an embodiment of the present disclosure.

Referring to FIG. 4, the first feature data may be input to the hyperprior encoder 310, and the hyperprior encoder 310 may process the first feature data according to parameters configured as a result of training to output the second feature data.

The second feature data may be input to the probability neural network 330 and the quantization neural network 410. The probability neural network 330 may process the second feature data according to parameters configured as a result of training to output the probability data. The quantization neural network 410 may process the second feature data according to parameters configured as a result of training to output quantized data.

The quantized data may include a quantization step size or a quantization parameter as a sample value.

The quantization step size is a value used for the quantization 22 of the sample, and a sample value may be quantized by dividing the sample value by the quantization step size and rounding a result of the dividing. On the other hand, the quantized sample value may be dequantized by multiplying the quantized sample value by the quantization step size.

The quantization step size may be approximated as in the following equation 1:

$$\text{Quantization step size} = 2^{\wedge}(\text{quantization parameter}/n) / \text{quantization scale}[\text{quantization parameter}\%n] \qquad \text{[Equation 1]}$$

In equation 1, the quantization scale[quantization parameter%n] refers to a scale value indicated by the quantization parameter among predetermined n scale values. The HEVC codec defines six scale values 26214, 23302, 20560, 18396, 16384 and 14564, so n is 6 according to the HEVC codec.

In an embodiment of the present disclosure, when the quantized data includes quantization parameters as samples, the quantization step size may be obtained from the quantization parameters for the quantization 22 and the dequantization 24 of the first feature data. For example, the above equation 1 may be used to derive the quantization step size.

When the quantization step size is obtained from the quantized data, the samples of the first feature data may be quantized according to the quantization step size, and samples of the quantized first feature data may be dequantized according to the quantization step size.

In an embodiment of the present disclosure, as the quantization step size for the samples of the first feature data is adaptively obtained for each sample from the trained quantization neural network 410, the currently restored image 300 of high quality may be obtained at a low bitrate as compared to uniform quantization and uniform dequantization.

As the first feature data is quantized according to the quantized data obtained through the procedure shown in FIG. 4, the distribution of the sample values of the first feature data before the quantization 22 may be different from the distribution of the sample values of the first feature data after the quantization 22. Hence, there may be a need to modify the probability data that is suitable for the aforementioned uniform quantization and uniform dequantization.

In an embodiment of the present disclosure, modified probability data may be obtained by applying a modifying procedure 430 based on the quantized data to the probability data output from the probability neural network 330. The modified probability data may be used in the entropy encoding 32 for the quantized first feature data and the entropy decoding 34 for the bitstream.

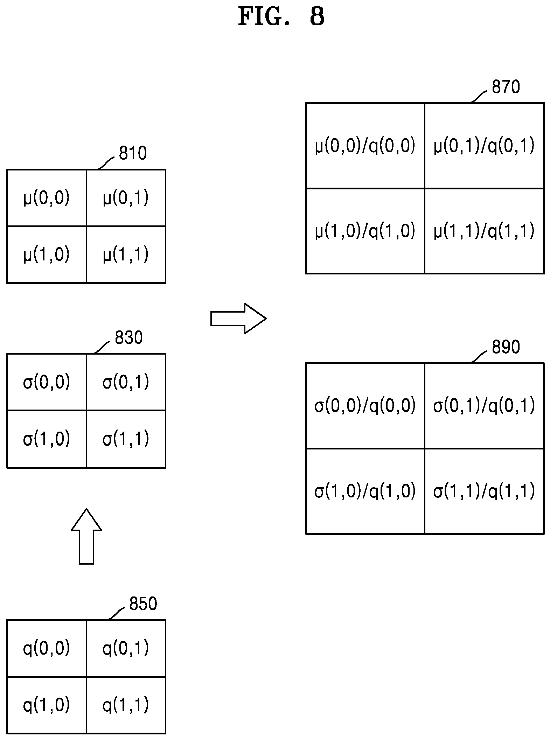

A method of modifying the probability data will be described later with reference to FIGS. 8 to 11.

In the embodiment as described in connection with FIG. 4, the quantized data and the probability data may be obtained from the second feature data corresponding to a latent feature of the first feature data that is a subject of the quantization 22 and the entropy encoding 32, and the probability data is modified according to the quantized data, thereby increasing the efficiency of the quantization 22 and the entropy encoding 32 to be performed in sequence.

In the meantime, in a procedure for training the quantization neural network 410, the quantization procedure is simulated by adding random uniform noise as in the following equation 2:

【Equation 2】

$$Q(x) = x + n, \; n \sim U[-0.5 \sim 0.5]$$

where x is a training data, n is a random uniform noise, and Q(x) is quantized training data.

All channels of the training data obtained during training may have a large quantization error.

However, when the quantization neural network is tested, quantization is performed by rounding as in the following equation 3:

【Equation 3】

$$Q(x) = [x + 0.5]$$

where x refers to test data, n refers to random uniform noise, Q(x) refers to quantized test data, and [] refers to the floor function. The floor function is a function that outputs a result n for an input real number x when the largest of integers smaller than or equal to x is n.

For the test data, some channels of the test data may have a very small quantization error and the other channels of the test data may have a large quantization error.

In other words, in the case of having a large quantization error during training, feature data with a large variance may also have a large quantization error during testing.

On the other hand, feature data with a small variance may have a large quantization error during training while having a small quantization error during testing.

In a case of image coding, i.e., still image coding, as most of channels of the feature data have a small variance to minimize the bitrate, a small quantization error occurs and almost no channel has a large variance.

Even in the case of video coding, i.e., moving image coding, as most of channels of the feature data have a small variance to minimize the bitrate, a small quantization error occurs and almost no channel has a large variance. Especially, when motion compensation is good, there are no channels with large variances.

As such, in the case of feature data having channels with small variances, there may be a mismatch between training and testing of the quantization neural network.

As a neural network based decoding device is trained or optimized for a large quantization error, coarse quantization, i.e., less precise quantization, may be required for testing to resolve the mismatch. Specifically, quantization that uses a quantization step whose size is 1 or greater may be required.

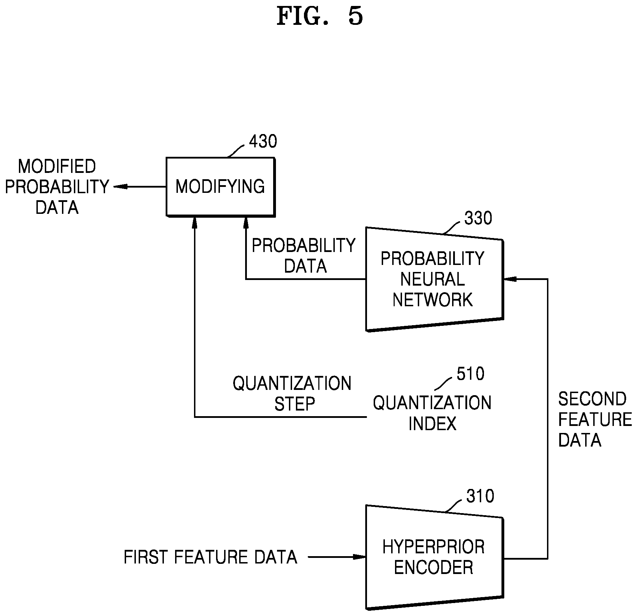

A method of selecting one of a plurality of predetermined quantization steps through rate-distortion optimization (RDO) rather than the neural network based quantized data and obtaining modified probability data based on the selected quantization step will now be described in connection with FIG. 5.

FIG. 5 is a diagram for describing a method of obtaining a quantization step determined by a quantization index used for quantization and dequantization, and modified probability data used for entropy encoding and entropy decoding, according to an embodiment of the present disclosure.

Referring to FIG. 5, the first feature data may be input to the hyperprior encoder 310, and the hyperprior encoder 310 may process the first feature data according to parameters configured as a result of training to output the second feature data.

The second feature data may be input to the probability neural network 330. The probability neural network 330 may process the second feature data according to parameters configured as a result of training to output the probability data.

A quantization index 510 indicating one of a plurality of quantization steps included in a predetermined quantization list may be obtained.

The quantization step may be determined by rate-distortion optimization (RDO) in the encoding procedure and signaled as the quantization index, and determined based on the transmitted quantization index in the decoding procedure.

Specifically, in the encoding procedure, an optimal quantization step is determined from among the plurality of predetermined quantization steps through the RDO calculation, and the quantization index 510 indicating the optimal quantization step is signaled in a bitstream. For example, among the predetermined quantization step values q1, q2, q3, ..., qN, the most optimal quantization step value q3 according to the RDO calculation may be determined by a value indicated by the quantization index. The probability distribution of the feature data is modified according to the optimal quantization step, and entropy encoding is performed based on the modified probability distribution.

In the decoding procedure, dequantization is performed according to the quantization step indicated by the quantization index 510 included in the bitstream, and entropy decoding is performed according to the modified probability distribution based on the quantization step.

The quantization step size is a value used for the quantization 22 of the sample, and a sample value may be quantized by dividing the sample value by the quantization step size and rounding a result of the dividing. On the other hand, the quantized sample value may be dequantized by multiplying the quantized sample value by the quantization step size. Furthermore, the quantization step size may be 1 or greater.

The quantization step size may be approximated as in the aforementioned equation 1.

In an embodiment of the present disclosure, when the quantization index 510 indicates one of a plurality of quantization parameters, a quantization step size may be obtained from the quantization parameter for the quantization 22 and the dequantization 24 of the first feature data. For example, the above equation 1 may be used to derive the quantization step size.

When the quantization step size is obtained according to the quantization index, the samples of the first feature data may be quantized according to the quantization step size, and the samples of the quantized first feature data may be dequantized according to the quantization step size.

As the first feature data is quantized according to the quantization step size obtained through the procedure shown in FIG. 5, the distribution of the sample values of the first feature data before the quantization 22 may be different from the distribution of the sample values of the first feature data after the quantization 22. Hence, there may be a need to modify the probability data that is suitable for the aforementioned uniform quantization and uniform dequantization.

In an embodiment of the present disclosure, modified probability data may be obtained by applying the modifying procedure 430 based on the quantization step to the probability data output from the probability neural network 330. The modified probability data may be used in the entropy encoding 32 for the quantized first feature data and the entropy decoding 34 for the bitstream.

In the embodiment as described in connection with FIG. 5, as the probability data is obtained from the second feature data corresponding to a latent feature of the first feature data that is a subject of the quantization 22 and the entropy encoding 32, a quantization step is obtained according to the quantization index 510, and the probability data is modified based on the quantization step, the efficiency of the quantization 22 and the entropy encoding 32 to be performed in sequence may increase.

Furthermore, as compared to FIG. 4, quantization and entropy encoding may be performed by modifying the probability data based on the quantization step determined through the RDO calculation instead of the quantization neural network, thereby flexibly resolving incompatibility between training and testing by applying each optimal quantization step for each feature data.

Moreover, as many channels of the feature data have small variances and the probability model is not always accurate, entropy coding for the channels with the small variances may not be accurate. Skipping the channels with small variances does not affect the quality of the restored image, thereby reducing the bitrate. Accordingly, quantizing and entropy encoding may be performed on channels with small variances based on a quantization step having the size of 1 or greater while being skipped for some of the channels with small variances. In other words, better coding efficiency may be obtained by quantizing and entropy encoding channels with small variances based on the quantization step along with a proper skipping procedure.

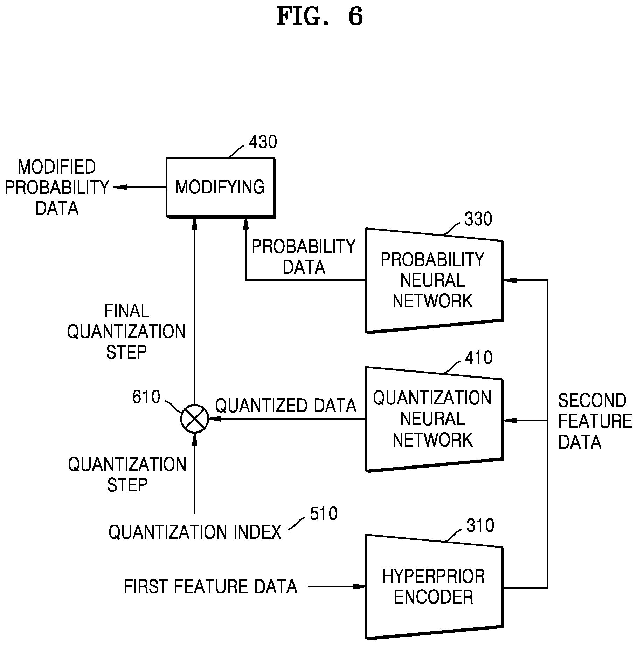

A method of obtaining final quantization step values by using quantized data based on the neural network and quantization steps based on quantization indexes and obtaining modified probability data based on final quantization steps will now be described in connection with FIG. 6.

FIG. 6 is a diagram for describing a method of obtaining a quantization step determined by quantized data and a quantization index used for quantization and dequantization, and modified probability data used for entropy encoding and entropy decoding, according to an embodiment of the present disclosure.

Referring to FIG. 6, the first feature data may be input to the hyperprior encoder 310, and the hyperprior encoder 310 may process the first feature data according to parameters configured as a result of training to output second feature data.

The second feature data may be input to the probability neural network 330 and the quantization neural network 410. The probability neural network 330 may process the second feature data according to parameters configured as a result of training to output the probability data. The quantization neural network 410 may process the second feature data according to parameters configured as a result of training to output quantized data.

The quantized data may include a quantization step size or a quantization parameter as a sample value.

The quantization index 510 indicating one of a plurality of quantization steps included in a predetermined quantization list may be obtained.

The quantization step may be determined by rate-distortion optimization (RDO) in the encoding procedure and signaled as the quantization index 510, and may be determined based on the transmitted quantization index 510 in decoding procedure.

Based on the quantized data obtained from the quantization neural network 410 and the quantization step determined based on the quantization index 510, final quantization step values may be obtained.

Specifically, when the sample values included in the quantized data represent quantization steps, final quantization step values may be obtained by multiplying in 610 the quantization step values included in the quantized data by the quantization step determined according to the quantization index 510.

The final quantization step value is a value used for the quantization 22 of the sample, and the sample value may be quantized by dividing the sample value by the quantization step size and rounding a result of the dividing. On the other hand, the quantized sample value may be dequantized by multiplying the quantized sample value by the quantization step size.

The final quantization step size may be approximated as in the aforementioned equation 1.

In an embodiment of the present disclosure, when the sample values included in the quantized data represent quantization parameters or the quantization index represents the quantization parameter, the quantization step size may be obtained from the quantization parameter for the quantization 22 and the dequantization 24 of the first feature data. For example, the above equation 1 may be used to derive the quantization step size.

In an embodiment of the present disclosure, when the quantized data is obtained from the trained quantization neural network 410, a quantization step size is obtained based on the quantization index 510, and the final quantization step size is obtained based on the quantized data and the quantization step size, samples of the first feature data may be quantized according to the final quantization step size and the quantized samples of the first feature data may be dequantized according to the final quantization step size.

As the first feature data is quantized according to the final quantization step values obtained through the procedure shown in FIG. 6, the distribution of the sample values of the first feature data before the quantization 22 may be different from the distribution of the sample values of the first feature data after the quantization 22. Hence, there may be a need to modify the probability data that is suitable for the aforementioned uniform quantization and uniform dequantization.

In an embodiment of the present disclosure, modified probability data may be obtained by applying the modifying procedure 430 based on the final quantization step to the probability data output from the probability neural network 330. The modified probability data may be used in the entropy encoding 32 for the quantized first feature data and the entropy decoding 34 for the bitstream.

In the embodiment as described in connection with FIG. 6, as the probability data is obtained from the second feature data corresponding to a latent feature of the first feature data that is a subject of the quantization 22 and the entropy encoding 32, final quantization step values are obtained based on the quantized data obtained from the quantization neural network and the quantization step determined according to the quantization index, and the probability data is modified based on the final quantization step values, the efficiency of the quantization 22 and the entropy encoding 32 to be performed in sequence may increase.

Furthermore, as compared to FIGS. 4 and 5, the final quantization step values are obtained based on the quantized data obtained from the quantization neural network 410 and the quantization step determined through RDO calculation and quantization and entropy encoding is performed by modifying the probability data based on the final quantization step values, thereby flexibly resolving incompatibility between training and testing and enhancing the quality of the restored image by adaptively quantizing each sample of each feature data.

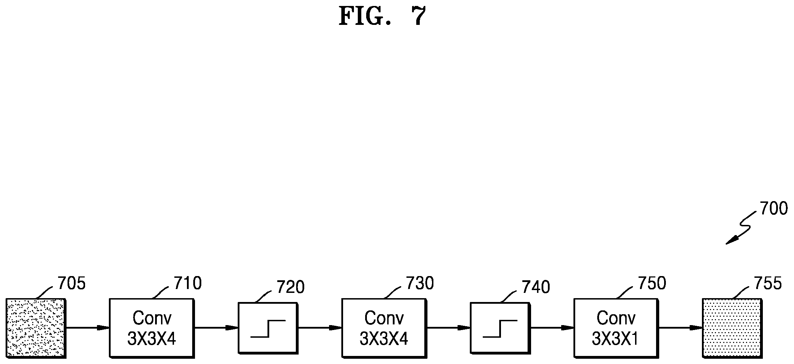

Exemplary structures of the hyperprior encoder 310, probability neural network 330 and quantization neural network 410 as described in FIGS. 4 to 6 will be described with reference to FIG. 7.

In an embodiment of the present disclosure, the modifying procedure 430 may be performed based on a neural network. An exemplary structure of the neural network for the modifying procedure 430 will be described in connection with FIG. 7.

FIG. 7 illustrates a structure of a neural network, according to an embodiment of the present disclosure.

As shown in FIG. 7, input data 705 may be input to a first convolution layer 710. '3X3X4' marked on the first convolution layer 710 indicates as an example that convolution on the input data 705 is performed by using four filter kernels each having a size of 3x3. As a result of the convolution process, four feature data may be generated by the four filter kernels.

In an embodiment of the present disclosure, the modifying procedure for the probability data may be performed based on a neural network. When the neural network 700 corresponds to the neural network for the modifying procedure, the input data 705 may include 2-channel data, i.e., the probability data and the quantized data. Furthermore, the input data 705 may include probability data and a quantization step indicated by a quantization index. Moreover, the input data 705 may include probability data and final quantization step values obtained based on the quantized data and a quantization step indicated by a quantization index.

In an embodiment of the present disclosure, when the neural network 700 corresponds to the probability neural network 330 or the quantization neural network 410, the input data 705 may include the second feature data.

In an embodiment of the present disclosure, when the neural network 700 corresponds to the hyperprior encoder 310, the input data 705 may include the first feature data.

Feature data generated by the first convolution layer 710 may represent unique features of the input data 705. For example, each feature data may represent a feature in the vertical direction, a feature in the horizontal direction or an edge feature of the input data 705.

The feature data of the first convolution layer 710 may be input to a first activation layer 720.

The first activation layer 720 may impart non-linear characteristics to each feature data. The first activation layer 720 may include a Sigmoid function, a Tanh function, a rectified linear unit (ReLU) function, etc., without being limited thereto.

The imparting of the non-linear characteristics in the first activation layer 720 may refer to changing some sample values of the feature data and outputting the result. In this case, the changing may be performed by applying the non-linear characteristics.

The first activation layer 720 may determine whether to forward the sample values of the feature data to a second convolution layer 730. For example, some of the sample values of the feature data may be activated by the first activation layer 720 and forwarded to the second convolution layer 730, and some sample values may be inactivated by the first activation layer 720 and not forwarded to the second convolution layer 730. The unique characteristics of the input data 705 represented by the feature data may be emphasized by the first activation layer 720.

The feature data output from the first activation layer 720 may be input to the second convolution layer 730. '3X3X4' marked on the second convolution layer 730 indicates as an example that convolution on the input feature data is performed by using four filter kernels each having a size of 3x3.

The output of the second convolution layer 730 may be input to a second activation layer 740. The second activation layer 740 may impart non-linear characteristics to the input feature data.

The feature data output from the second activation layer 740 may be input to a third convolution layer 750. '3X3X1' marked on the third convolution layer 750 indicates as an example that convolution is performed to produce one output data 755 by using one filter kernel having a size of 3x3.

The output data 755 varies depending on which one of the hyperprior encoder 310, the probability neural network 330, the quantization neural network 410 and the neural network for the modifying procedure is the neural network 700.

For example, in a case that the neural network 700 is the probability neural network 330, the output data 755 is the probability data, and in a case that the neural network 700 is the quantization neural network 410, the output data 755 may be the quantized data.

In an embodiment of the present disclosure, the number of the output data 755 may be adjusted by adjusting the number of filter kernels used in the third convolution layer 750.

For example, when the neural network 700 is the probability neural network 330 and the probability data includes mean data and standard deviation data, which will be described later, two filter kernels may be used for the third convolution layer 750 to output 2-channel data.

Furthermore, for example, when the neural network 700 is the probability neural network 330, the probability data includes mean data and standard deviation data, which will be described later, and the number of channels of the first feature data is M, 2M filter kernels may be used in the third convolution layers 750 to output M mean data and M standard deviation data.

Furthermore, for example, when the neural network 700 is the quantization neural network 410 and the number of channels of the first feature data is M, M filter kernels may be used in the third convolution layers 750 to output M quantized data.

The neural network 700 is shown in FIG. 7 as including three convolution layers (the first convolution layer 710, the second convolution layer 730 and the third convolution layer 750) and two activation layers (the first activation layer 720 and the second activation layer 740), but it is merely an example and in an embodiment of the present disclosure, the numbers of the convolution layers and activation layers included in the neural network 700 may be variously changed.

In an embodiment of the present disclosure, the size and number of the filter kernels used in the convolution layers included in the neural network 700 may also be variously changed.

In an embodiment of the present disclosure, the neural network 700 may be implemented by a recurrent neural network (RNN). This means that the CNN structure of the neural network 700 is changed to an RNN structure.

In an embodiment of the present disclosure, an image decoding device 1200 and an image encoding device 1800 may include at least one arithmetic logic unit (ALU) for a convolution operation and an operation of the activation layer.

The ALU may be implemented by a processor. For the convolution operation, the ALU may include a multiplier for performing multiplication between sample values of the feature data output from the previous layer or the input data and sample values of the filter kernel, and an adder for adding the resultant values of the multiplication.

For the operation of the activation layer, the ALU may include a multiplier for multiplying a weight used in a predetermined Sigmoid function, Tanh function or ReLU function by the input sample value, and a comparator for determining whether to forward the input sample value to the next layer by comparing the multiplication result with a certain value.

The probability data used for entropy encoding and entropy decoding will now be described with reference to FIGS. 8 to 11.

FIG. 8 is a diagram for describing a method of modifying probability data, according to an embodiment of the present disclosure.

In an embodiment of the present disclosure, the probability data output by the probability neural network 330 may represent probabilities of values that the samples of the first feature data may have.

In an embodiment of the present disclosure, the probability data may include means and standard deviations corresponding to the samples of the first feature data as samples. In this case, the probability data may include mean data 810 including means corresponding to the samples of the first feature data as samples and standard deviation data 830 including standard deviations corresponding to the samples of the first feature data as samples.

In an embodiment of the present disclosure, the probability neural network 330 may include mean data including means corresponding to the samples of the first feature data as samples and deviation data including deviations corresponding to the samples of the first feature data as samples.

In an embodiment of the present disclosure, modified probability data may be obtained by dividing the sample values of the probability data by the sample values of the quantized data.

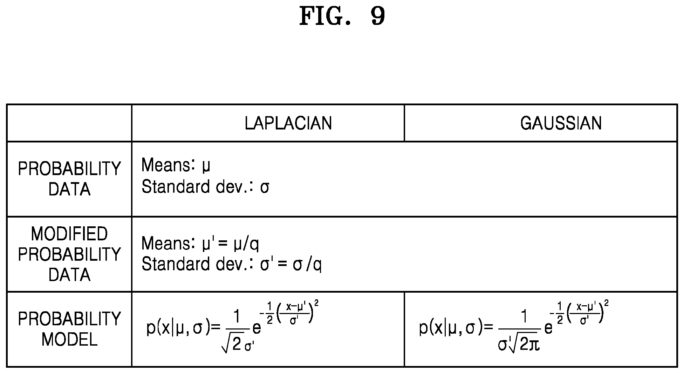

Referring to FIG. 8, the mean data 810 may include sample values $\mu(0,0)$ to $\mu(1,1)$, the standard deviation data 830 may include sample values $\sigma(0,0)$ to $\sigma(1,1)$, and the quantized data 850 may include sample values $q(0,0)$ to $q(1,1)$. $q(0,0)$ to $q(1,1)$ of the quantized data 850 may be quantization step sizes. In FIG. 9, (a, b) may refer to a position of a sample in the data.

When the quantization step is determined based on the quantization index, sample values $q(0,0)$ to $q(1,1)$ of the quantized data 850 may be one quantization step indicated by a quantization index. In other words, the sample values $q(0,0)$ to $q(1,1)$ may be the same quantization step value.

When the final quantization step values based on the quantized data and the quantization index are used, the sample values $q(0,0)$ to $q(1,1)$ of the quantized data 850 may be obtained by multiplying the quantization step sizes output from the quantization neural network 410 by the quantization step indicated by the quantization index.

Modified mean data 870 including $\mu(0,0)/q(0,0)$ to $\mu(1,1)/q(1,1)$ as samples may be obtained by dividing $\mu(0,0)$ to $\mu(1,1)$ in the mean data 810 by $q(0,0)$ to $q(1,1)$ in the quantized data 850.

Furthermore, modified standard deviation data 890 including $\sigma(0,0)/q(0,0)$ to $\sigma(1,1)/q(1,1)$ as samples may be obtained by dividing $\sigma(0,0)$ to $\sigma(1,1)$ in the standard deviation data 830 by $q(0,0)$ to $q(1,1)$ in the quantized data 850.

The dividing is an example, and in an embodiment of the present disclosure, the modified mean data 870 and the modified standard deviation data 890 may be obtained by multiplying the sample values of the mean data 810 and the standard mean data 830 by the sample values of the quantized data 850 or values derived from the sample values of the quantized data 850. When the quantized data 850 is determined based on the quantization index, the sample values may all be one quantization step value. Furthermore, the quantized data 850 may be final quantization step values determined based on the quantized data output from the quantization neural network 410 and the quantization step indicated by the quantization index.

In an embodiment of the present disclosure, a bit-shift operation may be used to perform division or multiplication on the sample values of the mean data 810 and the standard deviation data 830.

Probability values that the samples of the quantized first feature data may have may be derived according to the quantized data 850 by applying the sample values of the modified mean data 870 and the sample values of the modified standard deviation data 890 to a predetermined probability model.

The reason for dividing the sample values of the mean data 810 and the sample values of the standard deviation data 830 by the sample values of the quantized data 850 is that, when the sample value of the first feature data is divided based on the quantized data 850 and the resultant value of the division is rounded, the sample value of the first feature data increases or decreases depending on the magnitude of the quantization step size, and the probability model (e.g., a probability density function) for the first feature data needs to be changed accordingly. Hence, a probability model that is suitable for the quantized first feature data may be derived by downscaling the mean data 810 and the standard deviation data 830 according to the quantized data 850.

FIG. 9 is a diagram for describing probability data, modified probability data and a probability model, according to an embodiment of the present disclosure.

Referring to FIG. 9, the probability data may include a mean $\mu_a$ and a standard deviation $\sigma_a$, and as the mean $\mu_a$ and the standard deviation $\sigma_a$ of the probability data are divided by the quantization step size q of the quantized data, the quantization step size q indicated by the quantization index, or the final quantization step size q based on the quantization index and the quantized data, the modified probability data may include a modified mean $\mu_b$ and a modified standard deviation $\sigma_b$.

A probability of a value that a sample of the quantized first feature data may have may be determined by applying the modified mean $\mu_b$ and the modified standard deviation $\sigma_b$ to a predetermined probability model.

Referring to FIG. 9, for the predetermined probability model, a Laplacian probability model or a Gaussian model may be used.

The Laplacian probability model or the Gaussian probability model shown in FIG. 9 is an example. In an embodiment of the present disclosure, there may be various types of probability models to be used for entropy encoding and entropy decoding.

Which probability model is to be used for entropy encoding and entropy decoding of the first feature data may have been determined in advance. For example, a type of the probability model to be used for entropy encoding may be determined by the image encoding device 1800 in advance.

In an embodiment of the present disclosure, a type of the probability model to be used for entropy encoding may be separately determined for each image or each block included in the image.

In the case of using the Laplacian model for entropy encoding, a probability that a sample of the quantized first feature data may have may be derived by applying the modified mean $\mu_b$ and the modified standard deviation $\sigma_b$ to the Laplacian probability model.

Furthermore, in the case of using the Gaussian model for entropy encoding, a probability that a sample of the quantized first feature data may have may be derived by applying the modified mean $\mu_b$ and the modified standard deviation $\sigma_b$ to the Gaussian probability model.

In an embodiment of the present disclosure, the probability neural network 330 may output a plurality of probability data and a plurality of weight data as a result of processing the second feature data.

In an embodiment of the present disclosure, each of the plurality of probability data may include mean data and standard deviation data. In an embodiment of the present disclosure, each of the plurality of probability data may include mean data and deviation data.

A plurality of modified probability data may be obtained by modifying the plurality of probability data according to the quantized data obtained from the quantization neural network 410, a quantization step indicated by a quantization index, or final quantization step values determined based on the quantized data obtained from the quantization neural network 410 and the quantization step indicated by the quantization index.

As the plurality of modified probability data are combined according to the plurality of weight data, a probability that a sample of the quantized first feature data may have may be derived.

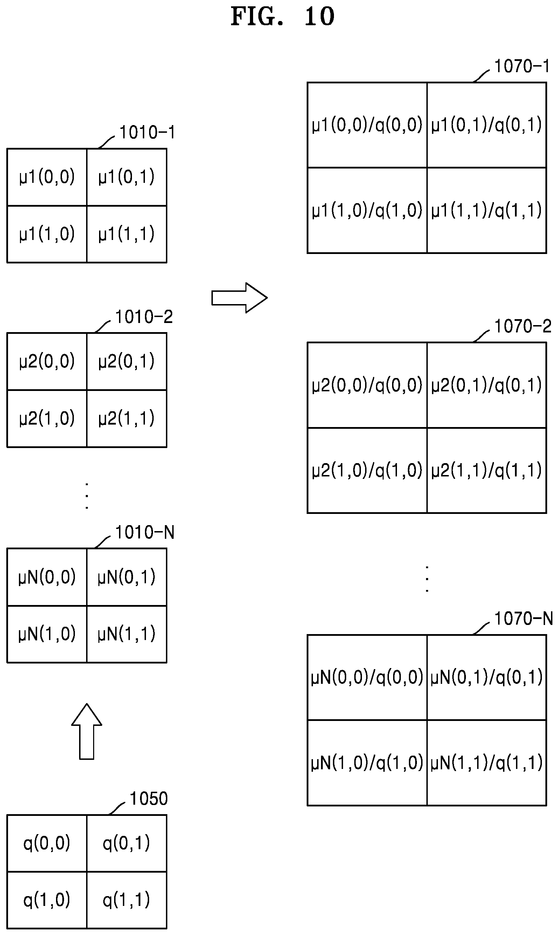

FIG. 10 is a diagram for describing a method of modifying a plurality of probability data, according to an embodiment of the present disclosure.

Referring to FIG. 10, N mean data 1010-1, 1010-2, ..., 1010-N may be obtained from the probability neural network 330.

Although not shown in FIG. 10, N standard deviation data and N weight data may also be obtained from the probability neural network 330.

A size or the number of samples of the N mean data 1010-1, 1010-2, ..., 1010-N, the N standard deviation data and the N weight data may be equal to the size or the number of samples of the first feature data.

In an embodiment of the present disclosure, when the number of the first feature data (or the number of channels) is M, M*N mean data, M*N standard deviation data and M*N weight data may be obtained from the probability neural network 330.

N modified mean data 1070-1, 1070-2, ..., 1070-N may be obtained by dividing sample values of the N mean data 1010-1, 1010-2, ..., 1010-N by sample values of quantized data 1050.

N modified standard deviation data may be obtained by dividing sample values of the N standard deviation data by the sample values of the quantized data 1050.

In an embodiment of the present disclosure, when the sample values of the quantized data 1050 are determined based on a quantization index, the sample values may all be one quantization step value. Furthermore, the sample values of the quantized data 1050 may be final quantization step values determined based on the quantized data output from the quantization neural network 410 and the quantization step indicated by the quantization index.

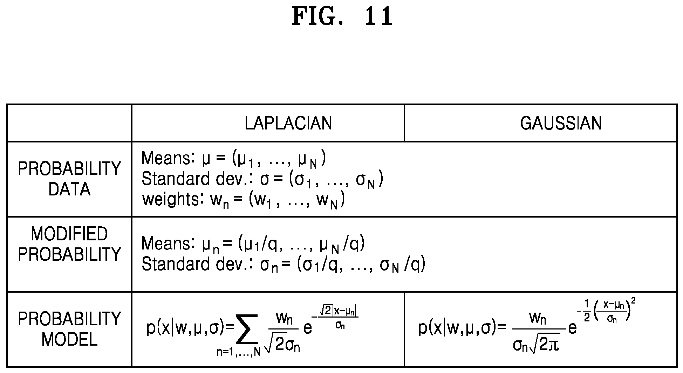

FIG. 11 is a diagram for describing probability data, modified probability data and a probability model, according to an embodiment of the present disclosure.

Referring to FIG. 11, when N mean data $\mu_a$, N standard deviation data $\sigma_a$ and N weight data w are obtained from the probability neural network 330, N modified mean data $\mu_b$ and N modified standard deviation data $\sigma_b$ may be obtained by dividing the N mean data $\mu_a$ and N standard deviation data $\sigma_a$ by the sample values of the quantized data q.

In an embodiment of the present disclosure, the N mean data $\mu_a$ shown in FIG. 11 may include the N mean data 1010-1, 1010-2, ..., 1010-N as shown in FIG. 10. For example, $\mu_{a1}$ of FIG. 11 may correspond to the mean data 1010-1 of FIG. 10. Furthermore, for example, $\mu_{b1}$ of FIG. 11 may correspond to the modified mean data 1070-1 that is a result of dividing $\mu_{a1}$ by the quantized data 1050.

In an embodiment of the present disclosure, when the sample values of the quantized data 1050 are determined based on a quantization index, the sample values may all be one quantization step value. Furthermore, the sample values of the quantized data 1050 may be final quantization step values determined based on the quantized data output from the quantization neural network 410 and the quantization step indicated by the quantization index.

Probabilities of values that samples of the quantized first feature data may have may be derived by applying the N modified mean data $\mu_b$, the N modified standard deviation data $\sigma_b$ and the N weight data w to the predetermined probability model, e.g., the Laplacian probability model or the Gaussian probability model shown in FIG. 11.

In an embodiment of the present disclosure, as the N modified mean data $\mu_b$ and the N modified standard deviation data $\sigma_b$ are obtained for one first feature data, and the N modified mean data $\mu_b$ and the N modified standard deviation data $\sigma_b$ are combined according to the N weight data w, the probability that a sample of the first feature data may have may be derived more accurately and stably.

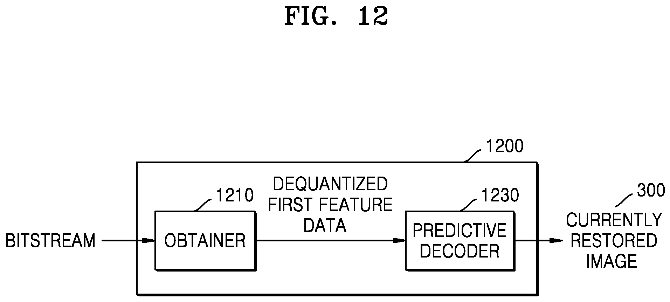

FIG. 12 illustrates a configuration of an image decoding device, according to an embodiment of the present disclosure.

Referring to FIG. 12, the image decoding device 1200 may include an obtainer 1210 and a predictive decoder 1230, according to an embodiment of the present disclosure.

The obtainer 1210 and the predictive decoder 1230 may be implemented by at least one processor. The obtainer 1210 and the predictive decoder 1230 may operate according to at least one instruction stored in memory.

The obtainer 1210 and the predictive decoder 1230 are shown separately in FIG. 12, but the obtainer 1210 and the predictive decoder 1230 may be implemented by one processor. In this case, the obtainer 1210 and the predictive decoder 1230 may be implemented by a dedicated processor or implemented by a combination of software and a universal processor such as an application processor (AP), a central processing unit (CPU) or a graphic processing unit (GPU). Furthermore, in the case of the dedicated processor, it may include memory for implementing an embodiment of the disclosure or a memory processor for using an external memory.

The obtainer 1210 and the predictive decoder 1230 may be implemented by a plurality of processors. In this case, the obtainer 1210 and the predictive decoder 1230 may be implemented by a combination of dedicated processors or implemented by a combination of software and multiple universal processors such as APs, CPUs or GPUs.

The obtainer 1210 may obtain a bitstream generated by neural network based encoding of the current image 100. The bitstream may be generated by the intra prediction as described in connection with FIG. 1 or the inter prediction as described in connection with FIG. 2.

The obtainer 1210 may receive the bitstream from the image encoding device 1800 over a network. In an embodiment of the present disclosure, the obtainer 1210 may obtain the bitstream from a data storage medium including a magnetic medium such as a hard disk, floppy disk and a magnetic tape, an optical recording medium such as a compact disk (CD) read only memory (ROM) (CD-ROM) and a digital versatile disc (DVD), a magneto-optical medium such as a floptical disk, etc.

The obtainer 1210 may obtain the dequantized first feature data from the bitstream.

In an embodiment of the present disclosure, the obtainer 1210 may obtain, from the bitstream, a quantization index that indicates one of the plurality of quantization steps included in a predetermined quantization list.

The first feature data may include at least one of the feature data k of the current image 100 output from the image encoder 12, the feature data w of the optical flow g output from the optical flow encoder 42 or the feature data v of the residual image r output from the residual encoder 52.

In an embodiment of the present disclosure, the obtainer 1210 may obtain the second feature data for the first feature data from the bitstream, and use the second feature data to obtain the modified probability data. In addition, the obtainer 510 may obtain dequantized first feature data by entropy decoding and dequantization of bits included in the bitstream.

In an embodiment of the present disclosure, the obtainer 1210 may obtain the second feature data for the first feature data from the bitstream, and use the second feature data to obtain the modified probability data. Furthermore, the obtainer 1210 may obtain a quantization step indicated by a quantization index. In addition, the obtainer 1210 may obtain dequantized first feature data by entropy decoding and dequantization of bits included in the bitstream.

In an embodiment of the present disclosure, the obtainer 1210 may obtain quantized data by using the second feature data, obtain a quantization step indicated by a quantization index, and obtain final quantization step values based on the quantized data and the quantization step.

The dequantized first feature data may be forwarded to the predictive decoder 1230, and the predictive decoder 1230 may obtain the currently restored image 300 by applying the dequantized first feature data to a neural network. The currently restored image 300 may be output to a display device for playback.

In an embodiment of the present disclosure, the predictive decoder 1230 may obtain the currently restored image 300 by applying the dequantized first feature data to the image decoder 14. In this case, the predictive decoder 1230 may be understood as restoring the current image 100 through intra prediction.

In an embodiment of the present disclosure, the predictive decoder 1230 may obtain the optical flow g by applying the dequantized first feature data, e.g., the dequantized feature data of the optical flow g, to the optical flow decoder 44. The predictive decoder 1230 may further obtain the restored residual image r' by applying the dequantized feature data of the residual image r to the residual decoder 54. The predictive decoder 1230 may obtain the currently restored image 300 by combining the currently predictive image x' obtained from the previously restored image 200 and the restored residual image r' based on the optical flow g. In this case, the predictive decoder 1230 may be understood as restoring the current image 100 through inter prediction.

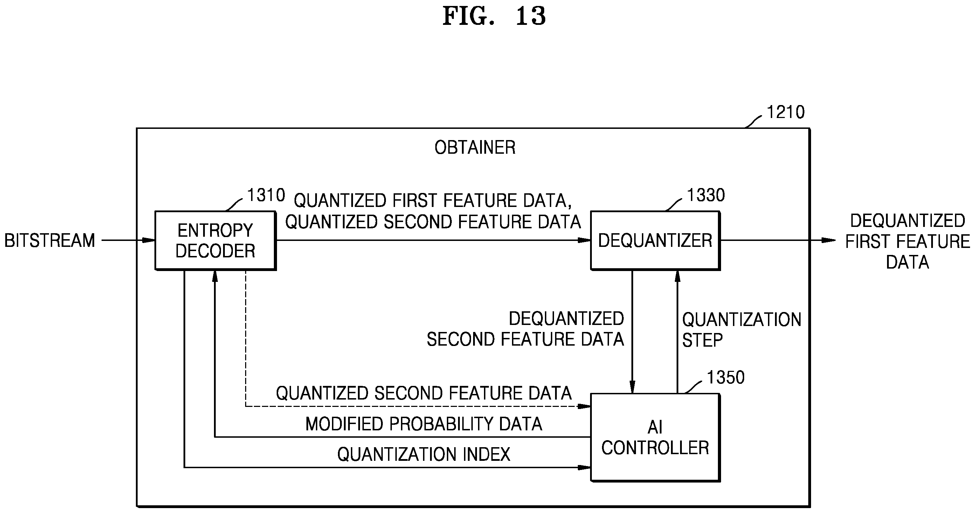

FIG. 13 illustrates a configuration of an obtainer, according to an embodiment of the present disclosure.

Referring to FIG. 13, the obtainer 1210 may include an entropy decoder 1310, a dequantizer 1330 and an AI controller 1350.

The bitstream may be input to the entropy decoder 1310, and the entropy decoder 1310 may obtain quantized second feature data by applying entropy decoding to bits included in the bitstream.

The entropy decoder 1310 may obtain, from the bitstream, a quantization index that indicates one of a plurality of quantization steps included in a predetermined quantization list.

The entropy decoder 1310 may transmit the quantization index to the AI controller 1350.

The second feature data may be data obtained by the hyperprior encoder 310 processing the first feature data. The image encoding device 1800 may quantize the second feature data, and generate a bitstream including bits corresponding to the quantized second feature data by entropy encoding the quantized second feature data.

In an embodiment of the present disclosure, quantization may not be applied to the second feature data. In this case, the entropy decoder 1310 may obtain the second feature data by applying entropy decoding to the bits included in the bitstream, and forward the obtained second feature data to the AI controller 1350.

The quantized second feature data may be forwarded to the dequantizer 1330. The dequantizer 1330 may dequantize the quantized second feature data and forward the dequantized second feature data to the AI controller 1350.

In an embodiment of the present disclosure, the quantized second feature data obtained by the entropy decoder 1310 may be provided to the AI controller 1350 from the entropy decoder 1310. This means that dequantization of the quantized second feature data is skipped.

In an embodiment of the present disclosure, the entropy decoder 1310 may use predetermined probability data to obtain the second feature data (non-quantized second feature data or quantized second feature data) from the bitstream.

The probability data used to obtain the second feature data may be determined on a rule basis. For example, the entropy decoder 1310 may determine the probability data used to obtain the second feature data according to a predefined rule without using any neural network.

In an embodiment of the present disclosure, the entropy decoder 1310 may obtain the probability data used to obtain the second feature data based on a pre-trained neural network.

In an embodiment of the present disclosure, the dequantizer 1330 may use predetermined quantized data to dequantize the quantized second feature data.

The quantized data used to obtain the second feature data may be determined on a rule basis. For example, the dequantizer 1330 may determine the quantized data used to dequantize the quantized second feature data according to a predefined rule without using any neural network. For example, the dequantizer 1330 may dequantize the quantized second feature data according to a predetermined quantization step size.

In an embodiment of the present disclosure, the dequantizer 1330 may dequantize sample values of the quantized second feature data according to the same quantization step size.

In an embodiment of the present disclosure, the dequantizer 1330 may obtain the quantized data used to dequantize the quantized second feature data based on a pre-trained neural network.

The AI controller 1350 may obtain probability data by using the second feature data, specifically, non-quantized second feature data, quantized second feature data or dequantized second feature data.

The AI controller 1350 may obtain a quantization step indicated by a quantization index.

In an embodiment of the present disclosure, the AI controller 1350 may use a neural network to obtain the probability data.

The AI controller 1350 may obtain modified probability data based on the probability data and the quantization step.

EP 4 753 259 A1

The modified probability data may be forwarded to the entropy decoder 1310, and the quantization step may be forwarded to the dequantizer 1330.

The entropy decoder 1310 may obtain quantized first feature data by applying entropy decoding based on the modified probability data to bits included in the bitstream. The quantized first feature data may be forwarded to the dequantizer 1330.

The dequantizer 1330 may dequantize the quantized first feature data based on the quantization step forwarded from the AI controller 1350, and forward the dequantized first feature data to the predictive decoder 1230.

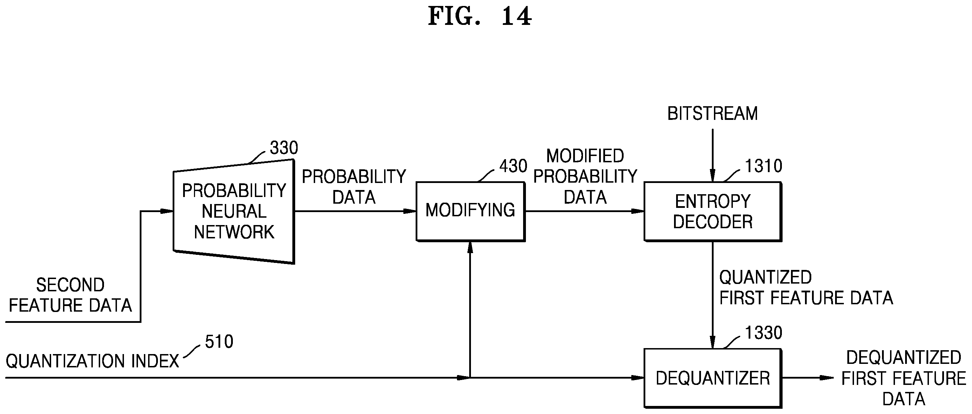

Referring to FIG. 14, operation of the AI controller 1350 will be described in more detail.

FIG. 14 is a diagram for describing operation of an AI controller, according to an embodiment of the present disclosure.

The AI controller 1350 may use the probability neural network 330 to obtain the probability data.

The probability neural network 330 may be stored in memory. In an embodiment of the present disclosure, the probability neural network 330 may be implemented by an AI processor.

The second feature data (specifically, non-quantized second feature data, quantized second feature data or dequantized second feature data) may be input to the probability neural network 330.

The probability neural network 330 may process the second feature data according to parameters configured as a result of training to output the probability data.

One of a plurality of quantization steps included in a predetermined quantization list may be determined from the quantization index 510 transmitted in a bitstream.

The quantization index may indicate a quantization parameter instead of the quantization step, and the probability data may include values that represent probabilities of values that the samples of the first feature data may have. In an embodiment of the present disclosure, the probability data may include a mean, a standard deviation and/or a variance for each sample of the first feature data as a sample.

In an embodiment of the present disclosure, the size or the number of samples of the probability data may be equal to the size or the number of samples of the first feature data.

As described above, as the distribution of the sample values of the first feature data may be changed through quantization based on an optimal quantization step indicated by a quantization index, the probability data may be modified through the modifying procedure 430 based on the quantization step.

In an embodiment of the present disclosure, the AI controller 1350 may obtain modified probability data by dividing the sample values of the probability data by the quantization step value. The dividing is an example, and in an embodiment of the present disclosure, the AI controller 1350 may obtain the modified probability data by multiplying the sample values of the probability data by the quantization step value or a value derived from the quantization parameter.

In an embodiment of the present disclosure, the AI controller 1350 may also use a bit-shift operation to perform division or multiplication on the sample values of the probability data.

In an embodiment of the present disclosure, the modifying procedure 430 may be performed based on a neural network as well. For example, the modified probability data may be obtained by applying the probability data and the quantization step to the neural network for the modifying procedure 430.

The AI controller 1350 may forward the modified probability data to the entropy decoder 1310, and forward the quantization step to the dequantizer 1330.

The entropy decoder 1310 may obtain quantized first feature data by applying entropy decoding based on the modified probability data to the bits of the bitstream. The dequantizer 1330 may obtain the dequantized first feature data by dequantizing the quantized first feature data according to the quantization step.

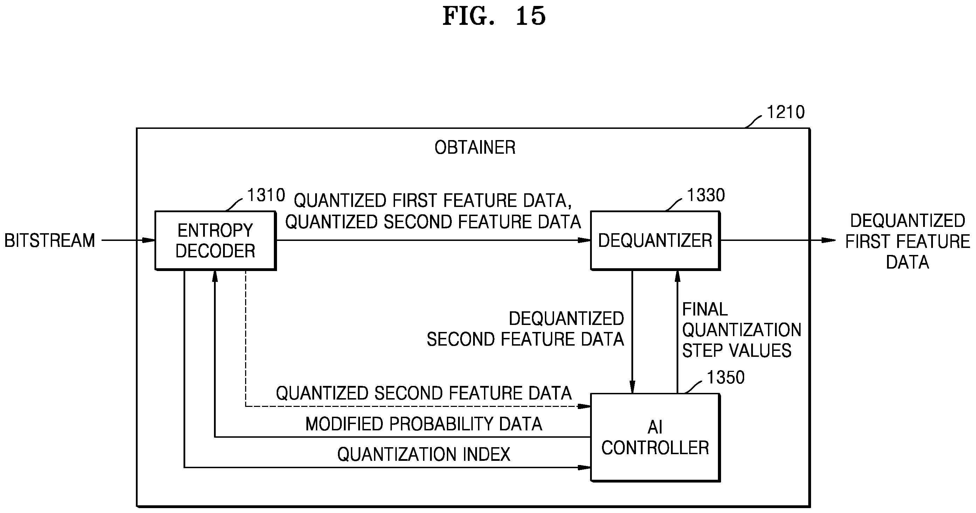

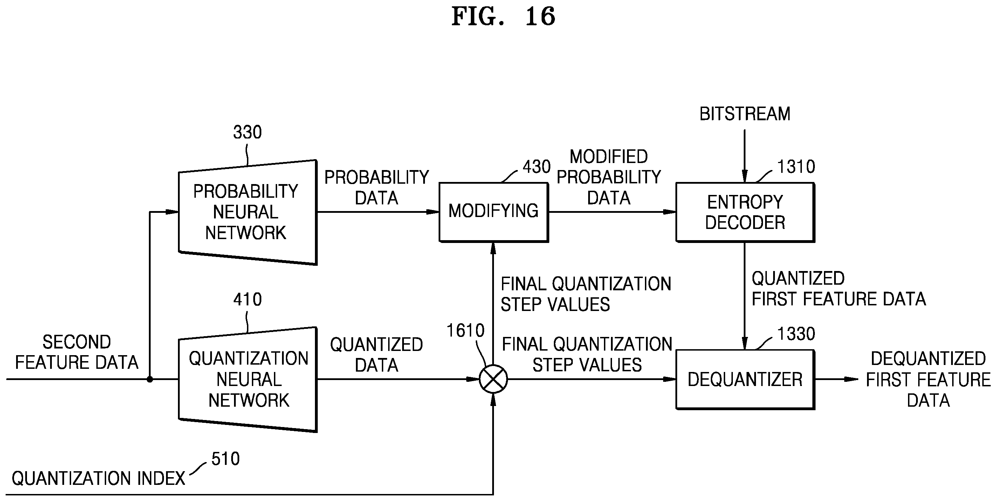

A configuration of the image decoding device 1200 that additionally uses quantized data obtained through the quantization neural network 410 in addition to the quantization step will be described in FIGS. 15 and 16.

FIG. 15 illustrates a configuration of an obtainer, according to an embodiment of the present disclosure.

Referring to FIG. 15, the obtainer 1210 may include the entropy decoder 1310, the dequantizer 1330 and the AI controller 1350.

The bitstream may be input to the entropy decoder 1310, and the entropy decoder 1310 may obtain quantized second feature data by applying entropy decoding to bits included in the bitstream.

The entropy decoder 1310 may obtain, from the bitstream, a quantization index that indicates one of a plurality of quantization steps included in a predetermined quantization list.

The entropy decoder 1310 may transmit the quantization index to the AI controller 1350.

The second feature data may be data obtained by the hyperprior encoder 310 processing the first feature data. The image encoding device 1800 may quantize the second feature data, and generate a bitstream including bits corresponding to the quantized second feature data by entropy encoding the quantized second feature data.

In an embodiment of the present disclosure, quantization may not be applied to the second feature data. In this case, the entropy decoder 1310 may obtain the second feature data by applying entropy decoding to the bits included in the bitstream, and forward the obtained second feature data to the AI controller 1350.

16

The quantized second feature data may be forwarded to the dequantizer 1330. The dequantizer 1330 may dequantize the quantized second feature data and forward the dequantized second feature data to the AI controller 1350.

In an embodiment of the present disclosure, the quantized second feature data obtained by the entropy decoder 1310 may be provided to the AI controller 1350 from the entropy decoder 1310. This means that dequantization of the quantized second feature data is skipped.

In an embodiment of the present disclosure, the entropy decoder 1310 may use predetermined probability data to obtain the second feature data (non-quantized second feature data or quantized second feature data) from the bitstream.

The probability data used to obtain the second feature data may be determined on a rule basis. For example, the entropy decoder 1310 may determine the probability data used to obtain the second feature data according to a predefined rule without using any neural network.

In an embodiment of the present disclosure, the entropy decoder 1310 may obtain the probability data used to obtain the second feature data based on a pre-trained neural network.

In an embodiment of the present disclosure, the dequantizer 1330 may use predetermined quantized data to dequantize the quantized second feature data.

The quantized data used to obtain the second feature data may be determined on a rule basis. For example, the dequantizer 1330 may determine the quantized data used to dequantize the quantized second feature data according to a predefined rule without using any neural network. For example, the dequantizer 1330 may dequantize the quantized second feature data according to a predetermined quantization step size.

In an embodiment of the present disclosure, the dequantizer 1330 may dequantize sample values of the quantized second feature data according to the same quantization step size.

In an embodiment of the present disclosure, the dequantizer 1330 may obtain the quantized data used to dequantize the quantized second feature data based on a pre-trained neural network.

The AI controller 1350 may use the second feature data, specifically, non-quantized second feature data, quantized second feature data or dequantized second feature data to obtain probability data and quantized data.

The AI controller 1350 may obtain a quantization step indicated by a quantization index. In an embodiment of the present disclosure, the AI controller 1350 may use a neural network to obtain the probability data and the quantized data.

The AI controller 1350 may determine final quantization step values based on the quantization step indicated by the quantization index and the quantized data.

The AI controller 1350 may obtain modified probability data based on the final quantization step values and the probability data.

The modified probability data may be forwarded to the entropy decoder 1310, and the final quantization step values may be forwarded to the dequantizer 1330.

The entropy decoder 1310 may obtain quantized first feature data by applying entropy decoding based on the modified probability data to bits included in the bitstream. The quantized first feature data may be forwarded to the dequantizer 1330.

The dequantizer 1330 may dequantize the quantized first feature data based on the final quantization step values forwarded from the AI controller 1350, and forward the dequantized first feature data to the predictive decoder 530.

Referring to FIG. 16, operation of the AI controller 1350 will be described in more detail.

FIG. 16 is a diagram for describing operation of an AI controller, according to an embodiment of the present disclosure.

The AI controller 1350 may use the probability neural network 330 and the quantization neural network 410 to obtain the probability data and the quantized data.

The probability neural network 330 and the quantization neural network 410 may be stored in memory. In an embodiment of the present disclosure, the probability neural network 330 and the quantization neural network 410 may be implemented by an AI processor.

The second feature data (specifically, non-quantized second feature data, quantized second feature data or dequantized second feature data) may be input to the probability neural network 330 and the quantization neural network 410.

The probability neural network 330 may process the second feature data according to parameters configured as a result of training to output the probability data.

The quantization neural network 410 may process the second feature data according to parameters configured as a result of training to output quantized data.

One of a plurality of quantization steps included in a predetermined quantization list may be determined from the quantization index 510 transmitted in a bitstream.

The quantized data may include quantization parameters or quantization step sizes, the quantization index may indicate a quantization parameter instead of the quantization step, and the probability data may include values that represent probabilities of values that the samples of the first feature data may have. In an embodiment of the present disclosure, the probability data may include a mean, a standard deviation and/or a variance for each sample of the first feature data as a sample.

In an embodiment of the present disclosure, the size or the number of samples of the quantized data and the probability data may be equal to the size or the number of samples of the first feature data.

As described above, final quantization step values may be determined by multiplying the optimal quantization step indicated by the quantization index 510 and the quantization step values included in the quantized data obtained from the quantization neural network 410.

As the distribution of the sample values of the first feature data may be changed through quantization based on the final quantization step values, the probability data may be modified through the modifying procedure 430 based on the quantized data.

In an embodiment of the present disclosure, the AI controller 1350 may obtain modified probability data by dividing the sample values of the probability data by the final quantization step values. The dividing is an example, and in an embodiment of the present disclosure, when the sample values included in the quantized data and a value indicated by the quantization index 510 are quantization parameters, the AI controller 1350 may derive quantization step values from the sample values included in the quantized data, derive a quantization step value from the quantization parameter indicated by the quantization index 510, and obtain final quantization step values by multiplying in 1610 the quantization step values derived from the quantized data by the quantization step value derived from the quantization index 510. The AI controller 1350 may then obtain modified probability data by multiplying the sample values of the probability data by the final quantization step values.

In an embodiment of the present disclosure, the AI controller 1350 may also use a bit-shift operation to perform division or multiplication on the sample values of the probability data.

In an embodiment of the present disclosure, the modifying procedure 430 may be performed based on a neural network as well. For example, the modified probability data may be obtained by applying the probability data and the final quantization step values to the neural network for the modifying procedure 430.

The AI controller 1350 may forward the modified probability data to the entropy decoder 1310, and forward the final quantization step values to the dequantizer 1330.

The entropy decoder 1310 may obtain quantized first feature data by applying entropy decoding based on the modified probability data to the bits of the bitstream. The dequantizer 1330 may dequantize the quantized first feature data according to the final quantization step values to obtain the dequantized first feature data.

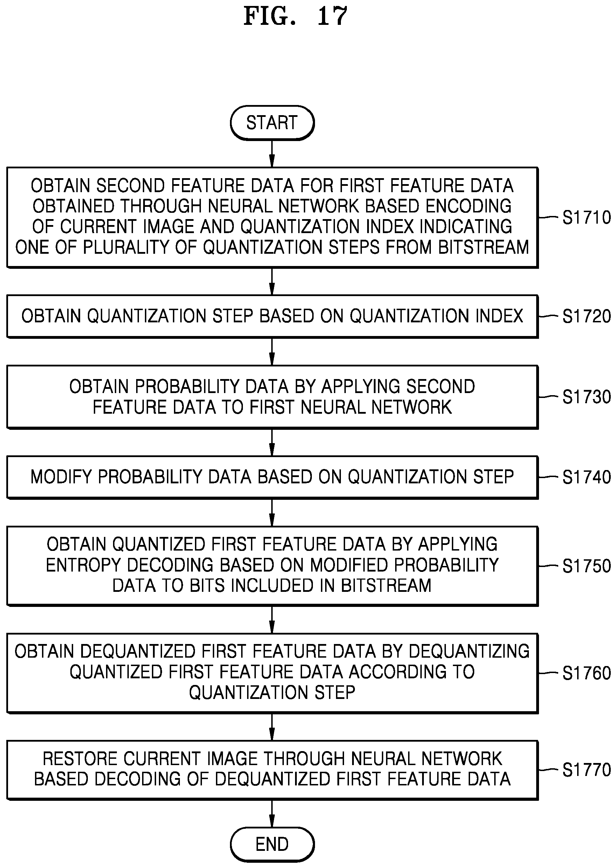

FIG. 17 is a diagram for describing an image decoding method, according to an embodiment of the present disclosure.

In operation S1710, the image decoding device 1200 may obtain second feature data for first feature data obtained by neural network based encoding of the current image 100 and a quantization index indicating one of a plurality of quantization steps from a bitstream.

In an embodiment of the present disclosure, the first feature data may include the feature data k obtained by applying the current image 100 to the image encoder 12, the feature data w obtained by applying the current image 100 and the previously restored image 200 to the optical flow encoder 42 or the feature data v obtained by applying the residual image r corresponding to the current image 100 to the residual encoder 52.

In an embodiment of the present disclosure, the image decoding device 500 may obtain the second feature data by applying entropy decoding to bits included in the bitstream.

In an embodiment of the present disclosure, the image decoding device 500 may obtain quantized second feature data by applying entropy decoding to the bits included in the bitstream, and dequantize the quantized second feature data.

In operation S1720, the image decoding device 1200 obtains a quantization step based on a quantization index.

In an embodiment of the present disclosure, the size of the quantization step indicated by the quantization index may be 1 or greater.

In an embodiment of the present disclosure, the quantization index may indicate one of the plurality of quantization steps included in a predetermined quantization list.

In operation S1730, the image decoding device 1200 obtains probability data by applying the second feature data to a neural network.

In operation S1740, the image decoding device 1200 may modify the probability data based on the quantization step.

In an embodiment of the present disclosure, the image decoding device 1200 may divide sample values of the probability data by the quantization step. When a value indicated by the quantization index corresponds to a quantization parameter, the image decoding device 1200 may determine a quantization step size from the quantization parameter, and divide the sample values of the probability data by the determined quantization step size.

In an embodiment of the present disclosure, sample values of the modified probability data may represent probabilities of values that the samples of the quantized first feature data may have.

In an embodiment of the present disclosure, the sample value of the modified probability data may represent a mean and a standard deviation corresponding to a sample of the quantized first feature data.

In an embodiment of the present disclosure, a probability of a value that a sample of the quantized first feature data may have may be derived by applying the mean and standard deviation represented by the sample value of the modified probability data to a predetermined probability model.

In operation S1750, the image decoding device 1200 obtains quantized first feature data by applying entropy decoding based on the modified probability data to bits included in the bitstream.

In operation S1760, the image decoding device 1200 obtains dequantized first feature data by dequantizing the quantized first feature data according to the quantization step.

In operation S1770, the image decoding device 1200 restores the current image 100 by neural network based decoding of the dequantized first feature data.

In an embodiment of the present disclosure, the image decoding device 1200 may restore the current image 100 by applying the dequantized first feature data to the image decoder 14, the optical flow decoder 44 and/or the residual decoder 54.

In an embodiment of the present disclosure, the image decoding device 1200 may further obtain quantized data by applying the second feature data to a second neural network, modify probability data based on the sample values of the quantized data and the quantization step, and dequantize the quantized first feature data based on the sample values of the quantized data and the quantization step.

In an embodiment of the present disclosure, final quantization step values may be determined by multiplying the sample values of the quantized data and the quantization step size, and the probability data may be modified based on the final quantization step values. The image decoding device 1200 may divide each of the sample values of the probability data by each of the final quantization step values corresponding to each of the samples.

In an embodiment of the present disclosure, the quantized data may include a quantization parameter or a quantization step size as a sample.

In an embodiment of the present disclosure, a plurality of probability data and a plurality of weights may be obtained by applying the second feature data to the first neural network, the plurality of probability data may be modified based on the quantization step indicated by the quantization index, and a probability of a value that a sample of the quantized first feature data may have may be determined by combining the plurality of modified probability data according to the plurality of weights.

In an embodiment of the present disclosure, a plurality of probability data and a plurality of weights may be obtained by applying the second feature data to the first neural network, the plurality of probability data may be modified based on the final quantization step values, and a probability of a value that a sample of the quantized first feature data may have may be determined by combining the plurality of modified probability data according to the plurality of weights.

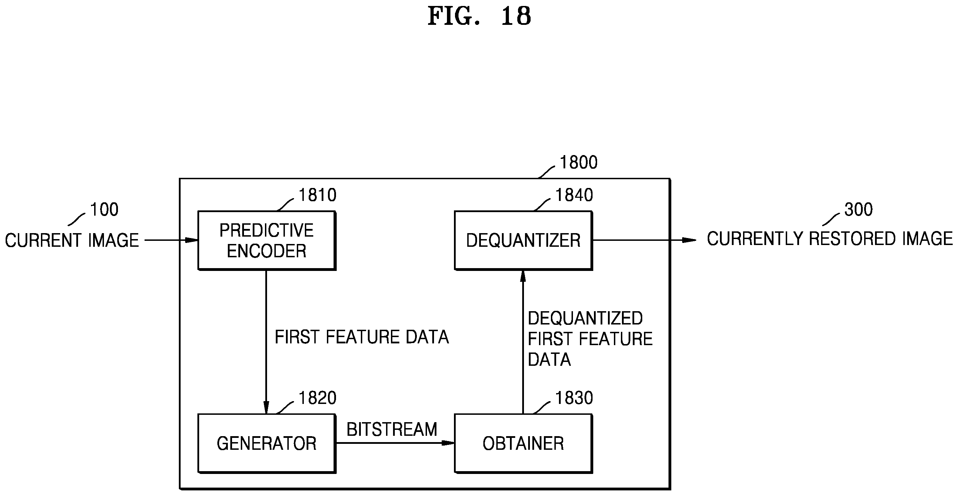

FIG. 18 illustrates a configuration of an image encoding device, according to an embodiment of the present disclosure.

Referring to FIG. 18, the image encoding device 1800 may include a predictive encoder 1810, a generator 1820, an obtainer 1830 and a predictive decoder 1840.

The predictive encoder 1810, the generator 1820, the obtainer 1830 and the predictive decoder 1840 may be implemented by a processor. The predictive encoder 1810, the generator 1820, the obtainer 1830 and the predictive decoder 1840 may operate according to instructions stored in memory.

The predictive encoder 1810, the generator 1820, the obtainer 1830 and the predictive decoder 1840 are shown separately in FIG. 18, but the predictive encoder 1810, the generator 1820, the obtainer 1830 and the predictive decoder 1840 may be implemented by one processor. In this case, the predictive encoder 1810, the generator 1820, the obtainer 1830 and the predictive decoder 1840 may be implemented by a dedicated processor or implemented by a combination of software and a universal processor such as an application processor (AP), a central processing unit (CPU) or a graphic processing unit (GPU). Furthermore, in the case of the dedicated processor, it may include memory for implementing an embodiment of the disclosure or a memory processor for using an external memory.

The predictive encoder 1810, the generator 1820, the obtainer 1830 and the predictive decoder 1840 may be implemented by a plurality of processors as well. In this case, the predictive encoder 1810, the generator 1820, the obtainer 1830 and the predictive decoder 1840 may be implemented by a combination of dedicated processors or implemented by a combination of software and multiple universal processors such as APs, CPUs or GPUs.

The predictive encoder 1810 may obtain the first feature data by applying neural network based encoding to the current image 100. The first feature data may include at least one of the feature data k of the current image 100, the feature data w of the optical flow g or the feature data v of the residual image r.

In an embodiment of the present disclosure, the predictive encoder 1810 may obtain the feature data k of the current image 100 by applying the current image 100 to the image encoder 12.

In an embodiment of the present disclosure, the predictive encoder 1810 may obtain the feature data w of the optical flow g by applying the current image 100 and the previously restored image 200 to the optical flow encoder 42.

In an embodiment of the present disclosure, the predictive encoder 1810 may obtain the feature data v of the residual image r by applying the residual image r corresponding to a difference between the currently predictive image x' and the current image 100 to the residual encoder 52.

The first feature data obtained by the predictive encoder 1810 may be forwarded to the generator 1820.

The generator 1820 may generate a bitstream based on the first feature data.

In an embodiment of the present disclosure, the generator 1820 may obtain the second feature data that represents a latent feature of the first feature data, and obtain probability data by applying the second feature data to a neural network. The generator 1820 may quantize the first feature data according to an optimal quantization step among the plurality of quantization steps determined in advance through the RDO calculation. The generator 1820 may obtain modified probability data based on the optimal quantization step and the probability data. The generator 1820 may generate a bitstream by entropy encoding the quantized first feature data according to the modified probability data.

In an embodiment of the present disclosure, the generator 1820 may generate the bitstream by entropy encoding the second feature data or the quantized second feature data according to predetermined probability data.

In an embodiment of the present disclosure, the bitstream may include bits corresponding to the quantized first feature data, bits corresponding to the second feature data or the quantized second feature data, and bits corresponding to the quantization index indicating the optimal quantization step.

The bitstream may be transmitted to the image decoding device 1200 over the network. In an embodiment of the present disclosure, the bitstream may be recorded in a data storage medium including a magnetic medium such as a hard disk, floppy disk and a magnetic tape, an optical recording medium such as a CD-ROM and a DVD, a magneto-optical medium such as floptical disk, etc.

The obtainer 1830 may obtain the dequantized first feature data and the quantization index from the bitstream generated by the generator 1820.

The dequantized first feature data may be forwarded to the predictive decoder 1840.

The predictive decoder 1840 may obtain the currently restored image 300 by applying neural network based decoding to the dequantized first feature data.

Configurations and operations of the obtainer 1830 and the predictive decoder 1840 may be equal to the obtainer 1210 and the predictive decoder 1230 of the image decoding device 1200.

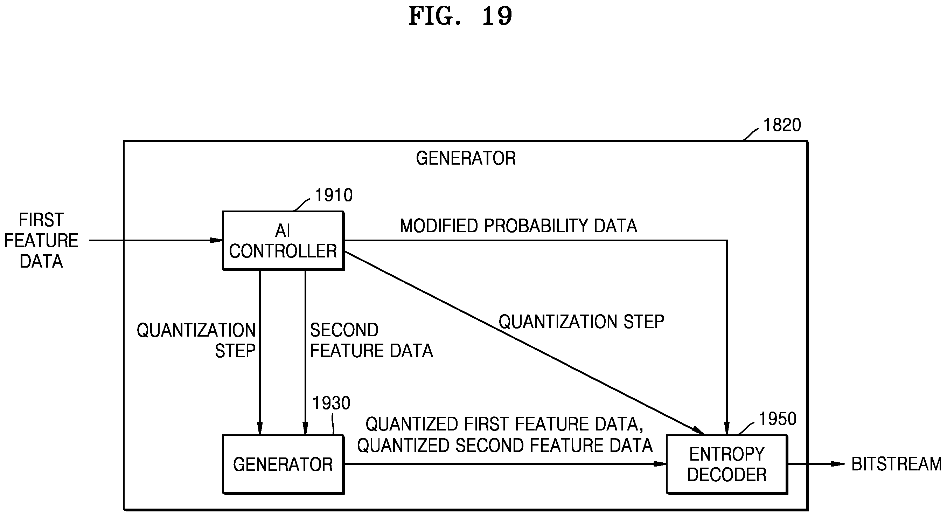

FIG. 19 illustrates a configuration of a generator, according to an embodiment of the present disclosure.

Referring to FIG. 19, the generator 1820 may include an AI controller 1910, a quantizer 1930 and an entropy encoder 1950.

The first feature data obtained by the predictive encoder 1810 may be forwarded to the AI controller 1910 and the quantizer 1930.

The AI controller 1910 may obtain the second feature data from the first feature data, and obtain probability data based on the second feature data. The AI controller 1910 may obtain one of the plurality of quantization steps. The AI controller 1910 may obtain modified probability data based on the probability data and the quantization step. The second feature data and the quantization step may be forwarded to the quantizer 1930, and the modified probability data may be forwarded to the entropy encoder 1950.

In an embodiment of the present disclosure, the AI controller 1910 may obtain probability data based on the second feature data to which quantization and dequantization are applied. For the quantization and dequantization of the second feature data, predetermined quantized data, e.g., quantized data determined on a rule basis, may be used.

The quantizer 1930 may obtain the quantized first feature data by quantizing the first feature data according to the quantization step.

In an embodiment of the present disclosure, the quantizer 1930 may obtain quantized second feature data by quantizing the second feature data according to the quantized data generated on a rule basis. In an embodiment of the present disclosure, the second feature data may be forwarded to the entropy encoder 1950 from the AI controller 1910. This means that quantization of the second feature data is skipped.

The quantizer 1930 may forward the quantized first feature data and the quantized second feature data to the entropy encoder 1950.

The entropy encoder 1950 may generate a bitstream by entropy encoding the quantized first feature data according to the modified probability data.

The entropy encoder 1950 may receive the quantization step from the AI controller 1910 and generate a bitstream by entropy encoding the quantization index indicating the quantization step.

In an embodiment of the present disclosure, the entropy encoder 1950 may generate the bitstream by entropy encoding the second feature data or the quantized second feature data according to the predetermined probability data.

The bitstream may include bits corresponding to the quantized first feature data, bits corresponding to the second feature data or the quantized second feature data, and bits corresponding to the quantization index.

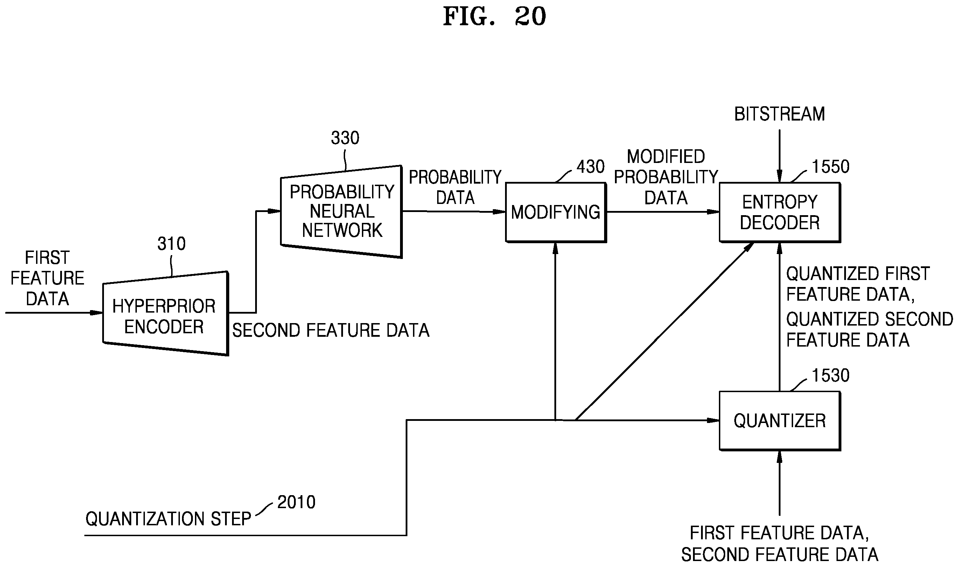

Referring to FIG. 20, operation of the AI controller 1910 will now be described in more detail.

FIG. 20 is a diagram for describing operation of an AI controller, according to an embodiment of the present disclosure.

The AI controller 1910 may use the hyperprior encoder 310 and the probability neural network 330.

The hyperprior encoder 310 and the probability neural network 330 may be stored in memory. In an embodiment of the present disclosure, the hyperprior encoder 310 and the probability neural network 330 may be implemented by an AI processor.

Referring to FIG. 20, the first feature data may be input to the hyperprior encoder 310.

The hyperprior encoder 310 may process the first feature data according to parameters configured as a result of training to obtain the second feature data. The second feature data may be input to the probability neural network 330.

In an embodiment of the present disclosure, the second feature data to which quantization and dequantization are applied may be input to the probability neural network 330. The reason for quantizing and dequantizing the second feature data is to consider an occasion when the bitstream forwarded to the image decoding device 1200 includes the quantized second feature data. In other words, as the image decoding device 1200 may obtain the probability data by using the dequantized second feature data, the image encoding device 1800 also uses the second feature data to which quantization and dequantization are applied in the same way as for the image decoding device 1200.

The probability neural network 330 may process the second feature data according to parameters configured as a result of training to output the probability data.

Among the plurality of predetermined quantization steps, one quantization step 2010 may be determined.

The probability data may include values representing probabilities of values that the samples of the first feature data may have. In an embodiment of the present disclosure, the probability data may include a mean, a standard deviation and/or a variance for each sample of the first feature data as a sample.

In an embodiment of the present disclosure, the size or the number of samples of the probability data may be equal to the size or the number of samples of the first feature data.

In an embodiment of the present disclosure, the probability data may be modified through the modifying procedure 430 based on the quantization step.

In an embodiment of the present disclosure, the AI controller 1910 may obtain modified probability data by dividing the sample values of the probability data by the quantization step. The dividing is an example, and the modified probability data may be obtained by multiplying the sample values of the probability data by the quantization step value. Furthermore, when the value indicated by the quantization index is a quantization parameter, the modified probability data may be obtained by multiplication with a quantization step value derived from the quantization parameter.

In an embodiment of the present disclosure, the AI controller 1910 may also use a bit-shift operation to perform division or multiplication on the sample values of the probability data.

In an embodiment of the present disclosure, the modifying procedure 430 may be performed based on a neural network as well. For example, the modified probability data may be obtained by applying the probability data and the quantization step to the neural network for the modifying procedure 430.

The AI controller 1910 may forward the modified probability data to the entropy encoder 1950, and forward the quantization step to the quantizer 1930.

The quantizer 1930 may obtain the quantized first feature data by quantizing the first feature data according to the quantization step. Furthermore, the quantizer 1930 may obtain the second feature data by quantizing the second feature data.

In an embodiment of the present disclosure, the quantizer 1930 may use predetermined quantized data to quantize the second feature data. The quantized data used to quantize the second feature data may be determined on a rule basis. In other words, the quantizer 1930 may determine the quantized data used to quantize the second feature data according to a predefined rule without using any neural network. For example, the quantizer 1930 may quantize the second feature data according to a predetermined quantization step size. In an embodiment of the present disclosure, the quantizer 1930 may quantize sample values of the second feature data according to the same quantization step size.

The entropy encoder 1950 may generate a bitstream by applying entropy encoding based on the modified probability data to the quantized first feature data. The entropy encoder 1950 may generate a bitstream including a quantization index that indicates the optimal quantization step among the plurality of quantization steps through the RDO calculation.

Furthermore, the entropy encoder 1950 may entropy encode the second feature data or the quantized second feature data.

In an embodiment of the present disclosure, the entropy encoder 1950 may use predetermined probability data to apply entropy encoding to the second feature data or the quantized second feature data. The probability data used to entropy encode the second feature data or the quantized second feature data may be determined on a rule basis. In other words, the entropy encoder 1950 may determine the probability data used to entropy encode the second feature data or the quantized second feature data according to a predefined rule without using any neural network.

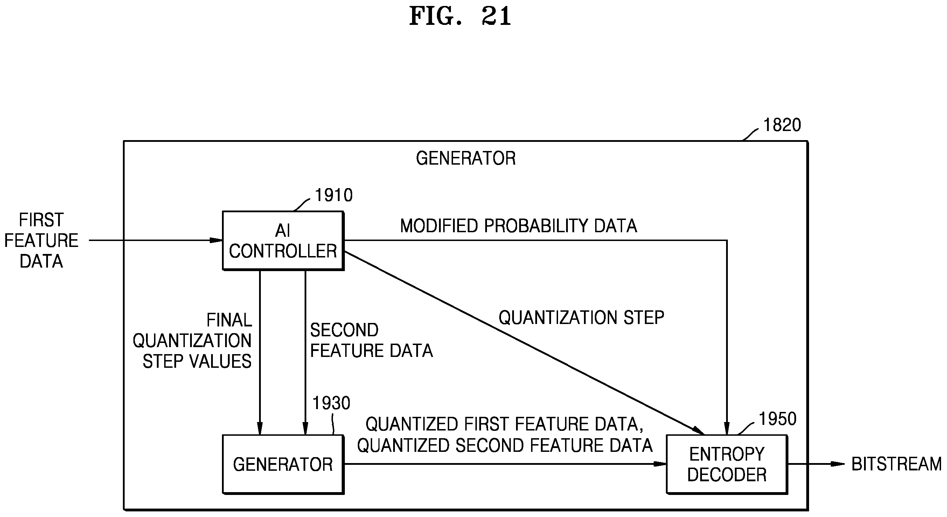

FIG. 21 illustrates a configuration of a generator, according to an embodiment of the present disclosure.

Referring to FIG. 21, the generator 1820 may include the AI controller 1910, the quantizer 1930 and the entropy encoder 1950.

The first feature data obtained by the predictive encoder 1810 may be forwarded to the AI controller 1910 and the quantizer 1930.

The AI controller 1910 may obtain the second feature data from the first feature data, and obtain quantized data and probability data based on the second feature data. The AI controller 1910 may obtain one of the plurality of quantization steps. The AI controller 1910 may obtain final quantization step values based on the quantization step and the quantized data. The AI controller 1910 may obtain modified probability data based on the probability data and the final quantization step values. The second feature data and the final quantization step values may be forwarded to the quantizer 1930, and the modified probability data may be forwarded to the entropy encoder 1950.

In an embodiment of the present disclosure, the AI controller 1910 may obtain the quantized data and the probability data based on the second feature data to which quantization and dequantization are applied. For the quantization and dequantization of the second feature data, predetermined quantized data, e.g., quantized data determined on a rule basis, may be used.

The quantizer 1930 may obtain quantized first feature data by quantizing the first feature data according to the final quantization step values.

In an embodiment of the present disclosure, the quantizer 1930 may obtain quantized second feature data by quantizing the second feature data according to the quantized data generated on a rule basis. In an embodiment of the present disclosure, the second feature data may be forwarded to the entropy encoder 1950 from the AI controller 1910. This means that quantization of the second feature data is skipped.

The quantizer 1930 may forward the quantized first feature data and the quantized second feature data to the entropy encoder 1950.

The entropy encoder 1950 may generate a bitstream by entropy encoding the quantized first feature data according to the modified probability data.

The entropy encoder 1950 may generate a bitstream by entropy encoding a quantization index indicating a quantization step selected from among the plurality of quantization steps.

In an embodiment of the present disclosure, the entropy encoder 1950 may generate the bitstream by entropy encoding the second feature data or the quantized second feature data according to the predetermined probability data.

The bitstream may include bits corresponding to the quantized first feature data, bits corresponding to the second feature data or the quantized second feature data, and bits corresponding to the quantization index.

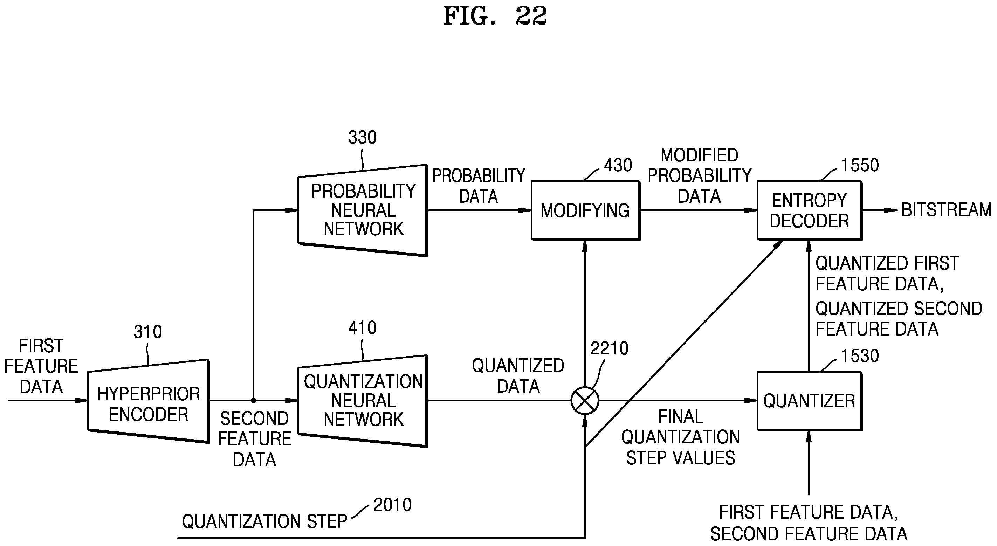

Referring to FIG. 22, operation of the AI controller 1910 will now be described in more detail.

FIG. 22 is a diagram for describing operation of an AI controller, according to an embodiment of the present disclosure.

The AI controller 1910 may use the hyperprior encoder 310, the quantization neural network 410 and the probability neural network 330.

The hyperprior encoder 310, the quantization neural network 410 and the probability neural network 330 may be stored in memory. In an embodiment of the present disclosure, the hyperprior encoder 310, the quantization neural network 410 and the probability neural network 330 may be implemented by an AI processor.

Referring to FIG. 22, the first feature data may be input to the hyperprior encoder 310.

The hyperprior encoder 310 may process the first feature data according to parameters configured as a result of training to obtain the second feature data. The second feature data may be input to the probability neural network 330 and the quantization neural network 410.

In an embodiment of the present disclosure, the second feature data to which quantization and dequantization are applied may be input to the probability neural network 330 and the quantization neural network 410. The reason for quantizing and dequantizing the second feature data is to consider an occasion when the bitstream forwarded to the image decoding device 1200 includes the quantized second feature data. In other words, as the image decoding device 1200 may obtain the probability data and the quantized data by using the dequantized second feature data, the image encoding device 1800 also uses the second feature data to which quantization and dequantization are applied in the same way as for the image decoding device 1200.

The probability neural network 330 may process the second feature data according to parameters configured as a result of training to output the probability data.

The quantization neural network 410 may process the second feature data according to parameters configured as a result of training to output quantized data.

Among the plurality of predetermined quantization steps, one quantization step 2010 may be determined.

The probability data may include values representing probabilities of values that the samples of the first feature data may have. In an embodiment of the present disclosure, the probability data may include a mean, a standard deviation and/or a variance for each sample of the first feature data as a sample.

In an embodiment of the present disclosure, the size or the number of samples of the quantized data and the probability data may be equal to the size or the number of samples of the first feature data.

In an embodiment of the present disclosure, final quantization step values may be determined based on the quantized data and a quantization step 2010. The final quantization step values may be determined by multiplying in 2210 the quantization step values of the quantized data and the quantization step 2010.

In an embodiment of the present disclosure, the probability data may be modified through the modifying procedure 430 based on the final quantization step values.

In an embodiment of the present disclosure, the AI controller 1910 may obtain modified probability data by dividing the sample values of the probability data by a final quantization step value for each sample. The dividing is an example, and the modified probability data may be obtained by multiplying the sample values of the probability data by a final quantization step value for each sample.

In an embodiment of the present disclosure, the AI controller 1910 may also use a bit-shift operation to perform division or multiplication on the sample values of the probability data.

In an embodiment of the present disclosure, the modifying procedure 430 may be performed based on a neural network as well. For example, the modified probability data may be obtained by applying the probability data and the final quantization step values to the neural network for the modifying procedure 430.

The AI controller 1910 may forward the modified probability data to the entropy encoder 1950, and forward the final quantization step values to the quantizer 1930.

The quantizer 1930 may obtain the quantized first feature data by quantizing the first feature data according to the final quantization step values. Furthermore, the quantizer 1930 may obtain the second feature data by quantizing the second feature data.

In an embodiment of the present disclosure, the quantizer 1930 may use predetermined quantized data to quantize the second feature data. The quantized data used to quantize the second feature data may be determined on a rule basis. In other words, the quantizer 1930 may determine the quantized data used to quantize the second feature data according to a predefined rule without using any neural network. For example, the quantizer 1930 may quantize the second feature data according to a predetermined quantization step size. In an embodiment of the present disclosure, the quantizer 1930 may quantize sample values of the second feature data according to the same quantization step size.

The entropy encoder 1950 may generate a bitstream by applying entropy encoding based on the modified probability data to the quantized first feature data.

The entropy encoder 1950 may generate a bitstream including a quantization index that indicates the optimal quantization step among the plurality of quantization steps through the RDO calculation.

Furthermore, the entropy encoder 1950 may entropy encode the second feature data or the quantized second feature data.

In an embodiment of the present disclosure, the entropy encoder 1950 may use predetermined probability data to apply entropy encoding to the second feature data or the quantized second feature data. The probability data used to entropy encode the second feature data or the quantized second feature data may be determined on a rule basis. In other words, the entropy encoder 1950 may determine the probability data used to entropy encode the second feature data or the quantized second feature data according to a predefined rule without using any neural network.

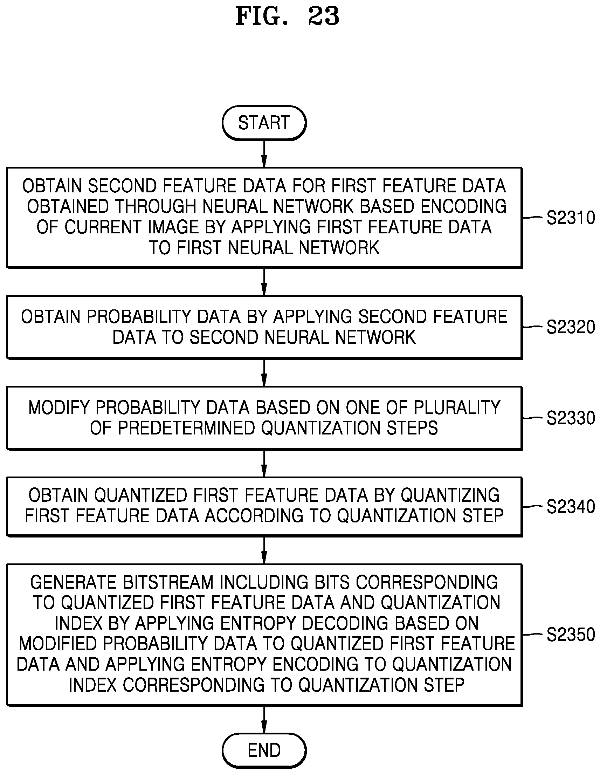

FIG. 23 is a diagram for describing an image encoding method, according to an embodiment of the present disclosure.

In operation S2310, the image encoding device 1800 applies first feature data obtained by neural network based encoding of the current image 100 to a first neural network to obtain second feature data for the first feature data.

In an embodiment of the present disclosure, the first neural network may be the hyperprior encoder 310.

In an embodiment of the present disclosure, the first feature data may include the feature data k obtained by applying the current image 100 to the image encoder 12, the feature data w obtained by applying the current image 100 and the previously restored image 200 to the optical flow encoder 42 or the feature data v obtained by applying the residual image r corresponding to the current image 100 to the residual encoder 52.

In operation S2320, the image encoding device 1800 obtains probability data by applying the second feature data to a second neural network (e.g., the probability neural network 330).

In an embodiment of the present disclosure, the image encoding device 1800 may obtain the probability data by applying the quantized and dequantized second feature data to the neural network.

In operation S2330, the image encoding device 1800 modifies the probability data based on one of a plurality of predetermined quantization steps. In an embodiment of the present disclosure, the image encoding device 1800 may divide the sample values of the probability data by the quantization step. Furthermore, the image encoding device 1800 may determine the quantization step from one of a plurality of quantization parameters, and divide the sample values of the probability data by the determined quantization step.

In an embodiment of the present disclosure, the sample values of the modified probability data may represent probabilities of values that the samples of the quantized first feature data may have. In an embodiment of the present disclosure, the sample value of the modified probability data may represent a mean and a standard deviation corresponding to a sample of the quantized first feature data.

In an embodiment of the present disclosure, a probability of a value that a sample of the quantized first feature data may have may be derived by applying the mean and standard deviation represented by the sample value of the modified probability data to a predetermined probability model.

In operation S2340, the image encoding device 1400 may obtain quantized first feature data by quantizing the first feature data according to the quantization step.

In an embodiment of the present disclosure, the image encoding device 1800 may further obtain quantized data by applying the second feature data to a third neural network (e.g., the quantization neural network 410), modify the probability data based on the sample values of the quantized data and the quantization step, and quantize the first feature data based on the sample values of the quantized data and the quantization step.

In an embodiment of the present disclosure, final quantization step values may be determined by multiplying the sample values of the quantized data and the quantization step size, and the probability data may be modified based on the final quantization step values. The image decoding device 1200 may divide the sample values of the probability data by a final quantization step value for each sample.

In an embodiment of the present disclosure, the quantized data may include a quantization parameter or a quantization step size as a sample.

In an embodiment of the present disclosure, a plurality of probability data and a plurality of weights may be obtained by applying the second feature data to the second neural network, the plurality of probability data may be modified based on the quantization step indicated by the quantization index, and a probability of a value that a sample of the quantized first feature data may have may be determined by combining the plurality of modified probability data according to the plurality of weights.

In an embodiment of the present disclosure, a plurality of probability data and a plurality of weights may be obtained by applying the second feature data to the second neural network, the plurality of probability data may be modified based on the final quantization step values, and a probability of a value that a sample of the quantized first feature data may have may be determined by combining the plurality of modified probability data according to the plurality of weights.

In an embodiment of the present disclosure, the image encoding device 1800 may obtain the quantized second feature data by quantizing the second feature data according to predetermined quantized data.

In operation S2350, the image encoding device 1800 may generate a bitstream including bits corresponding to the quantized first feature data and the quantization index by applying entropy encoding based on the modified probability data for the quantized first feature data and applying entropy encoding to the quantization index corresponding to the quantization step.

In an embodiment of the present disclosure, the size of the quantization step indicated by the quantization index may be 1 or greater.

In an embodiment of the present disclosure, the quantization index may indicate one of the plurality of quantization steps included in a predetermined quantization list.

In an embodiment of the present disclosure, the image encoding device 1800 may entropy encode non-quantized second feature data or the quantized second feature data according to predetermined probability data. In this case, the bitstream may include bits corresponding to the quantized first feature data, bits corresponding to the non-quantized second feature data or the quantized second feature data, and bits corresponding to the quantization index.

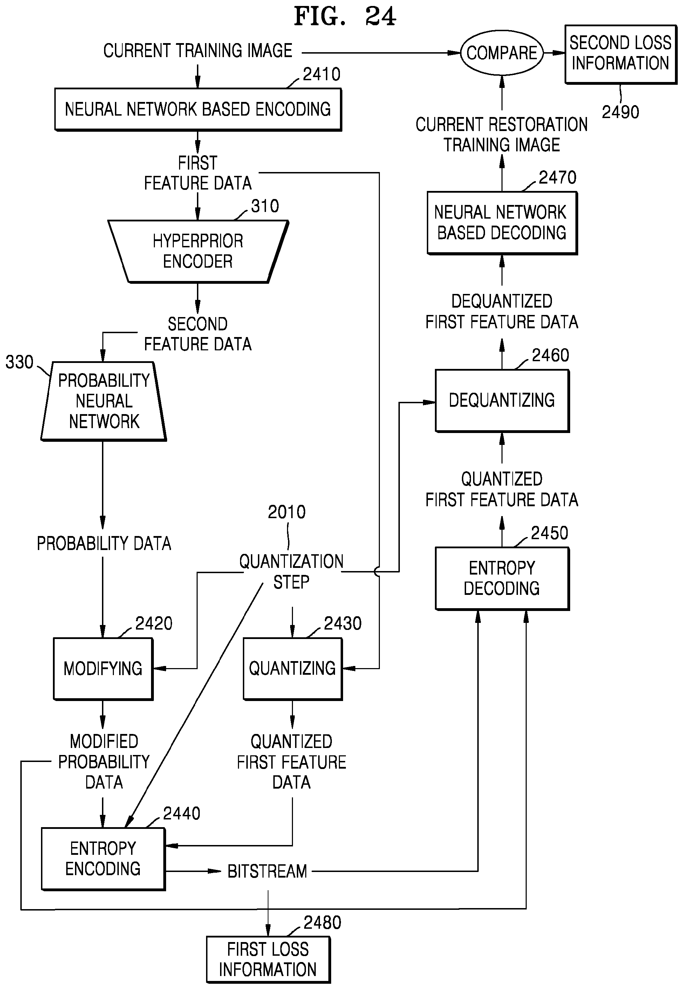

How to train the aforementioned neural networks, the hyperprior encoder 310 and the probability neural network 330 will now be described with reference to FIG. 24.

FIG. 24 is a diagram for describing a method of training neural networks, according to an embodiment of the present disclosure.

Referring to FIG. 24, a current training image may correspond to the aforementioned current image 100, and a current restoration training image may correspond to the aforementioned currently restored image 300.

In a training procedure according to an embodiment of the present disclosure, neural networks may be trained such that the current restoration training image is as similar as possible to the current training image and the bitrate of the bitstream generated by encoding the current training image is minimized. For this, as shown in FIG. 24, first loss information 2480 and second loss information 2490 may be used to train the neural networks.

Specifically, in the procedure for training the neural networks, the first feature data may be obtained first by applying a neural network based encoding procedure 2410 to the current training image.

The neural network based encoding procedure 2410 may be a procedure for encoding the current training image based on the image encoder 12, the optical flow encoder 42 and/or the residual encoder 52.

The first feature data may include at least one of feature data obtained by processing the current training image by the image encoder 12, feature data obtained by processing the current training image and a previous restoration training image by the optical flow encoder 42 or feature data obtained by processing a residual training image corresponding to a difference between the current training image and a currently predictive training image by the residual encoder 52. The currently predictive training image may be obtained by modifying the previous restoration training image according to the optical flow g.

The first feature data may be input to the hyperprior encoder 310. The hyperprior encoder 310 may process the first feature data according to preconfigured parameters to output the second feature data.

The second feature data may be input to the probability neural network 330. The probability neural network 330 may process the second feature data according to the preconfigured parameters to output probability data.

The quantization step 2010 may be one selected from among a plurality of predetermined quantization steps. The quantization step 2010 may be selected through the RDO calculation.

The probability data may be modified through a modifying procedure 2420 based on the quantization step. The modifying procedure 2420 was described in connection with FIGS. 8 to 11, so the detailed description will not be repeated.

A quantization procedure 2430 based on the quantization step is applied to the first feature data to obtain quantized first feature data. Furthermore, a bitstream may be generated by applying an entropy encoding procedure 2440 based on the modified probability data to the quantized first feature data. The quantization index indicating the quantization step may also be included in the bitstream in the entropy encoding procedure 2440.

In an embodiment of the present disclosure, the bitstream may include bits corresponding to the second feature data or the quantized second feature data.

Quantized first feature data may be obtained by performing an entropy decoding procedure 2450 based on the modified probability data on the bitstream, and dequantized first feature data may be obtained by performing a dequantization procedure 2460 according to the quantization step on the quantized first feature data.

The current restoration training image may be obtained by processing the dequantized first feature data according to a neural network based decoding procedure 2470.

The neural network based decoding procedure may be a procedure for restoring the current image 100 based on the image decoder 14, the optical flow decoder 44 and/or the residual decoder 54.

To train the neural network used in the neural network based encoding procedure, the hyperprior encoder 310, the probability neural network 330, and the neural network used in the neural network based decoding procedure, at least one of the first loss information 2480 or the second loss information 2490 may be obtained.

The first loss information 2480 may be calculated from the bitrate of the bitstream generated as a result of encoding the current training image.

The first loss information 2480 is related to coding efficiency for the current training image, so the first loss information may be referred to as compression loss information.

The second loss information 2490 may correspond to a difference between the current training image and the current restoration training image. In an embodiment of the present disclosure, the difference between the current training image and the current restoration training image may include at least one of L1-norm value, L2-norm value, structural similarity (SSIM) value, peak signal-to-noise ratio-human vision system (PSNR-HVS) value, multiscale SSIM (MS-SSIM) value, variance inflation factor (VIF) value or video multimethod assessment fusion (VMAF) value.

The second loss information 2490 is related to the quality of the current restoration training image, and thus, may be referred to as the quality loss information.

The neural network used in the neural network based encoding procedure, the hyperprior encoder 310, the probability neural network 330 and the neural network used in the neural network based decoding procedure may be trained such that final loss information derived from at least one of the first loss information 2480 or the second loss information 2490 may be reduced or minimized.

In an embodiment of the present disclosure, the neural network used in the neural network based encoding procedure, the hyperprior encoder 310, the probability neural network 330 and the neural network used in the neural network based decoding procedure may reduce or minimize the final loss information by changing values of the preconfigured parameters.

In an embodiment of the present disclosure, the final loss information may be calculated according to the following equation 4:

【Equation 4】

Final loss information = a*first loss information + b*second loss information

In equation 4, a and b are weights applied to the first loss information 2480 and the second loss information 2490, respectively.

According to equation 4, it may be understood that the neural network used in the neural network based encoding procedure, the hyperprior encoder 310, the probability neural network 330 and the neural network used in the neural network based decoding procedure are trained to make the current restoration training image as similar as possible to the current training image and minimize the size of the bitstream.

The training procedure as described in connection with FIG. 24 may be performed by a training device. The training device may be, for example, the image encoding device 1800 or a separate server. Parameters obtained as a result of training may be stored in the image encoding device 1800 and the image decoding device 1200.

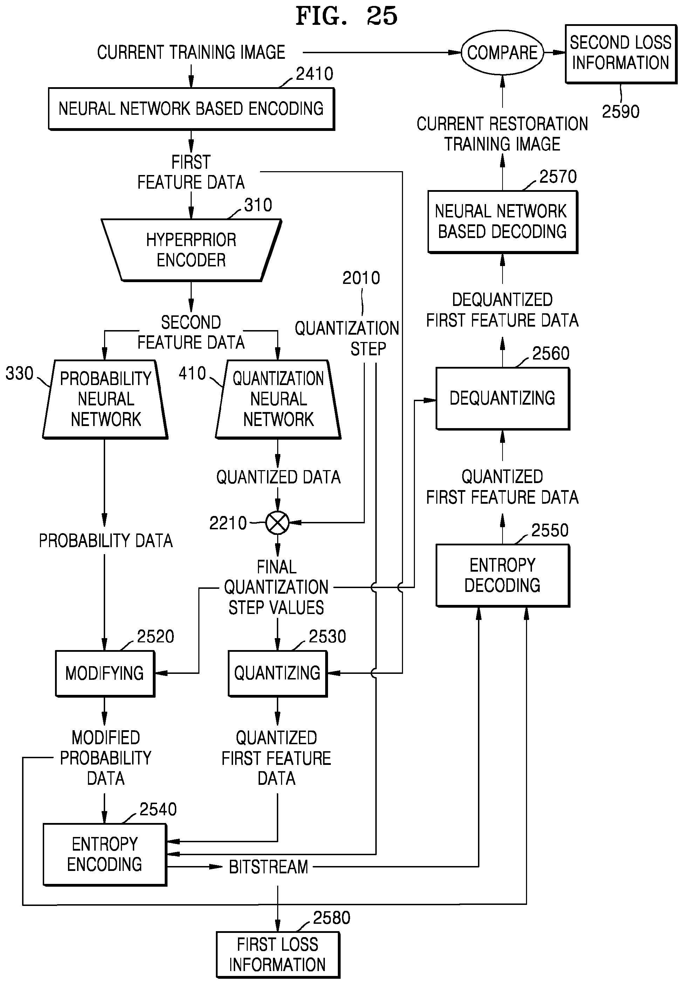

How to train the aforementioned neural networks, the hyperprior encoder 310, the probability neural network 330 and the quantization neural network 410 will now be described with reference to FIG. 25.

FIG. 25 is a diagram for describing a method of training neural networks, according to an embodiment of the present disclosure.

Referring to FIG. 25, a current training image may correspond to the aforementioned current image 100, and a current restoration training image may correspond to the aforementioned currently restored image 300.

In a training procedure according to an embodiment of the present disclosure, neural networks may be trained such that the current restoration training image is as similar as possible to the current training image and the bitrate of the bitstream generated by encoding the current training image is minimized. For this, as shown in FIG. 25, first loss information 2580 and second loss information 2590 may be used to train the neural networks.

Specifically, in the procedure for training the neural networks, the first feature data may be obtained first by applying a neural network based encoding procedure 2510 to the current training image.

The neural network based encoding procedure 2510 may be a procedure for encoding the current training image based on the image encoder 12, the optical flow encoder 42 and/or the residual encoder 52.

The first feature data may include at least one of feature data obtained by processing the current training image by the image encoder 12, feature data obtained by processing the current training image and a previous restoration training image by the optical flow encoder 42 or feature data obtained by processing a residual training image corresponding to a difference between the current training image and a currently predictive training image by the residual encoder 52. The currently predictive training image may be obtained by modifying the previous restoration training image according to the optical flow g.

The first feature data may be input to the hyperprior encoder 310. The hyperprior encoder 310 may process the first feature data according to preconfigured parameters to output the second feature data.

The second feature data may be input to the probability neural network 330 and the quantization neural network 410. The probability neural network 330 and the quantization neural network 410 may process the second feature data according to the preconfigured parameters to output probability data and quantized data, respectively.

The quantization step 2010 may be one selected from among a plurality of predetermined quantization steps.

Final quantization step values may be obtained by multiplying the quantized data and the quantization step 2010.

The probability data may be modified through a modifying procedure 2520 based on the final quantization step values. The modifying procedure 2520 was described in connection with FIGS. 8 to 11, so the detailed description will not be repeated.

A quantization procedure 2530 based on the final quantization step values may be applied to the first feature data to obtain quantized first feature data. Furthermore, a bitstream may be generated by applying an entropy encoding procedure 2540 based on the modified probability data to the quantized first feature data. The quantization index indicating the quantization step may also be included in the bitstream in the entropy encoding procedure 2540.

In an embodiment of the present disclosure, the bitstream may include bits corresponding to the second feature data or the quantized second feature data.

Quantized first feature data may be obtained by performing an entropy decoding procedure 2550 based on the modified probability data on the bitstream, and dequantized first feature data may be obtained by performing a dequantization procedure 2560 according to the final quantization step values on the quantized first feature data.

The current restoration training image may be obtained by processing the dequantized first feature data according to a neural network based decoding procedure 2570.

The neural network based decoding procedure may be a procedure for restoring the current image 100 based on the image decoder 14, the optical flow decoder 44 and/or the residual decoder 54.

To train the neural network used in the neural network based encoding procedure, the hyperprior encoder 310, the probability neural network 330, the quantization neural network 410 and the neural network used in the neural network based decoding procedure, at least one of first loss information 2580 or second loss information 2590 may be obtained.

The first loss information 2580 may be calculated from the bitrate of the bitstream generated as a result of encoding the current training image.

The first loss information 2580 is related to coding efficiency for the current training image, so the first loss information may be referred to as compression loss information.

The second loss information 2590 may correspond to a difference between the current training image and the current restoration training image. In an embodiment of the present disclosure, the difference between the current training image and the current restoration training image may include at least one of L1-norm value, L2-norm value, structural similarity (SSIM) value, peak signal-to-noise ratio-human vision system (PSNR-HVS) value, multiscale SSIM (MS-SSIM) value, variance inflation factor (VIF) value or video multimethod assessment fusion (VMAF) value.

The second loss information 2590 is related to the quality of the current restoration training image, and thus, may be referred to as the quality loss information.

The neural network used in the neural network based encoding procedure, the hyperprior encoder 310, the probability neural network 330, the quantization neural network 410 and the neural network used in the neural network based decoding procedure may be trained such that final loss information derived from at least one of the first loss information 2580 or the second loss information 2590 may be reduced or minimized.

In an embodiment of the present disclosure, the neural network used in the neural network based encoding procedure, the hyperprior encoder 310, the probability neural network 330, the quantization neural network 410 and the neural network used in the neural network based decoding procedure may reduce or minimize the final loss information by changing values of the preconfigured parameters.

In an embodiment of the present disclosure, the final loss information may be calculated according to the following equation 5:

【Equation 5】

Final loss information = a*first loss information + b*second loss information

In equation 5, a and b are weights applied to the first loss information 2580 and the second loss information 2590, respectively.

According to equation 5, it may be understood that the neural network used in the neural network based encoding procedure, the hyperprior encoder 310, the probability neural network 330, the quantization neural network 410 and the neural network used in the neural network based decoding procedure are trained to make the current restoration training image as similar as possible to the current training image and minimize the size of the bitstream.

The training procedure as described in connection with FIG. 25 may be performed by a training device. The training device may be, for example, the image encoding device 1800 or a separate server. Parameters obtained as a result of training may be stored in the image encoding device 1800 and the image decoding device 1200.

According to an embodiment of the present disclosure, an image decoding method may include obtaining second feature data for first feature data obtained through neural network based encoding for a current image and a quantization index indicating one of a plurality of quantization steps from a bitstream; obtaining the quantization step based on the quantization index; obtaining probability data by applying the second feature data to a first neural network; modifying the probability data based on the quantization step; obtaining quantized first feature data by applying entropy decoding based on the modified probability data to bits included in the bitstream; obtaining dequantized first feature data by dequantizing the quantized first feature data according to the quantization step; and restoring the current image by neural network based decoding of the dequantized first feature data.

According to an embodiment of the present disclosure, the image decoding method may address a mismatch between training data and test data, which is likely to occur in a neural network for image decoding trained or optimized for large quantization errors by using one of a plurality of quantization steps determined in advance through RDO calculation.

Furthermore, in an embodiment of the present disclosure, the image decoding method may efficiently dequantize and entropy decode feature data generated by AI based encoding of an image.

Moreover, in an embodiment of the present disclosure, the image decoding method may reduce the bitrate of the bitstream and enhance the quality of the restored image.

In an embodiment of the present disclosure, the size of the quantization step indicated by the quantization index may be 1 or greater.

According to an embodiment of the present disclosure, the image decoding method may resolve the mismatch by using less-precise quantization.

In an embodiment of the present disclosure, the quantization index may indicate one of the plurality of quantization steps included in a predetermined quantization list.

According to an embodiment of the disclosure, the image decoding method may reduce the time required for RDO calculation by selecting one quantization step from among the plurality of quantization steps included in the predetermined quantization list.

In an embodiment of the present disclosure, the image decoding method may further include obtaining quantized data by applying the second feature data to a second neural network, wherein the probability data may be modified based on sample values of the quantized data and the quantization step, and the quantized first feature data may be dequantized based on the sample values of the quantized data and the quantization step.

In an embodiment of the present disclosure, final quantization step values may be obtained by multiplying the sample values of the quantized data and the quantization step, and the probability data may be modified based on the final quantization step values.

According to an embodiment of the present disclosure, the image decoding method may resolve the mismatch and improve the quality of the restored image by adaptive quantization for each sample of each feature data.

In an embodiment of the present disclosure, sample values of the modified probability data may represent probabilities of values that the samples of the quantized first feature data may have.

In an embodiment of the present disclosure, the sample values of the modified probability data may represent means and standard deviations corresponding to samples of the quantized first feature data.

In an embodiment of the present disclosure, probabilities of values that samples of the quantized first feature data may have may be derived by applying the means and standard deviations represented by the sample values of the modified probability data to a predetermined probability model.

In an embodiment of the present disclosure, the modifying of the probability data may include dividing the sample values of the probability data by the quantization step.

In an embodiment of the present disclosure, a plurality of probability data and a plurality of weights may be obtained by applying the second feature data to the first neural network, the plurality of probability data may be modified based on the quantization step, and a probability of a value that a sample of the quantized first feature data may have may be determined by combining the plurality of modified probability data according to the plurality of weights.

According to an embodiment of the present disclosure, the image decoding method may perform entropy decoding more effectively by modifying the probability data for feature data.

In an embodiment of the present disclosure, the first feature data may include the feature data k obtained by applying the current image 100 to the image encoder 12, the feature data w obtained by applying the current image 100 and the previously restored image 200 to the optical flow encoder 42 or the feature data v obtained by applying the residual image r corresponding to the current image 100 to the residual encoder 52.

According to an embodiment of the present disclosure, the image decoding method may restore the current image more efficiently through neural network based decoding.

According to an embodiment of the present disclosure, an image decoding device may include memory storing one or more instructions; and at least one processor configured to operate according to the one or more instructions. The at least one processor may be configured to obtain second feature data for first feature data obtained through neural network based encoding for a current image and a quantization index indicating one of a plurality of quantization steps from a bitstream. The at least one processor may be configured to obtain the quantization step based on the quantization index. The at least one processor may be configured to obtain probability data by applying the second feature data to a first neural network. The at least one processor may be configured to modify the probability data based on the quantization step. The at least one processor may be configured to obtain quantized first feature data by applying entropy decoding based on the modified probability data to bits included in the bitstream. The at least one processor may be configured to obtain dequantized first feature data by dequantizing the quantized first feature data according to the quantization step. The at least one processor may be configured to restore the current image by neural network based decoding of the dequantized first feature data.

According to an embodiment of the present disclosure, the image decoding device may address a mismatch between training data and test data, which is likely to occur in a neural network for image decoding trained or optimized for large quantization errors by using one of a plurality of quantization steps determined in advance through RDO calculation.

Furthermore, in an embodiment of the present disclosure, the image decoding device may efficiently dequantize and entropy decode feature data generated by AI based encoding of an image.

Moreover, in an embodiment of the present disclosure, the image decoding device may reduce the bitrate of a bitstream and enhance the quality of a restored image.

In an embodiment of the present disclosure, the size of the quantization step indicated by the quantization index may be 1 or greater.

According to an embodiment of the present disclosure, the image decoding device may resolve the mismatch by using less-precise quantization.

In an embodiment of the present disclosure, the quantization index may indicate one of the plurality of quantization steps included in a predetermined quantization list.

According to an embodiment of the disclosure, the image decoding device may reduce the time required for RDO calculation by selecting one quantization step from among the plurality of quantization steps included in the predetermined quantization list.

In an embodiment of the present disclosure, the at least one processor of the image decoding device may be configured to obtain quantized data by applying the second feature data to a second neural network. The probability data may be modified based on sample values of the quantized data and the quantization step, and the quantized first feature data may be dequantized based on the sample values of the quantized data and the quantization step.

In an embodiment of the present disclosure, final quantization step values may be obtained by multiplying the sample values of the quantized data and the quantization step, and the probability data may be modified based on the final quantization step values.

According to an embodiment of the present disclosure, the image decoding device may resolve the mismatch and improve the quality of the restored image by adaptive quantization for each sample of each feature data.

In an embodiment of the present disclosure, sample values of the modified probability data may represent probabilities of values that the samples of the quantized first feature data may have.

In an embodiment of the present disclosure, the sample values of the modified probability data may represent means and standard deviations corresponding to samples of the quantized first feature data.

In an embodiment of the present disclosure, probabilities of values that samples of the quantized first feature data may have may be derived by applying the means and standard deviations represented by the sample values of the modified probability data to a predetermined probability model.

In an embodiment of the present disclosure, the modifying of the probability data may include dividing the sample values of the probability data by the quantization step.

In an embodiment of the present disclosure, a plurality of probability data and a plurality of weights may be obtained by applying the second feature data to the first neural network, the plurality of probability data may be modified based on the quantization step, and a probability of a value that a sample of the quantized first feature data may have may be determined by combining the plurality of modified probability data according to the plurality of weights.

According to an embodiment of the present disclosure, the image decoding device may perform entropy decoding more effectively by modifying the probability data for feature data.

In an embodiment of the present disclosure, the first feature data may include the feature data k obtained by applying the current image 100 to the image encoder 12, the feature data w obtained by applying the current image 100 and the previously restored image 200 to the optical flow encoder 42 or the feature data v obtained by applying the residual image r corresponding to the current image 100 to the residual encoder 52.

According to an embodiment of the present disclosure, the image decoding device may restore the current image more efficiently through neural network based decoding.

According to an embodiment of the present disclosure, an image encoding method may include obtaining, for first feature data obtained through neural network based encoding of a current image, second feature data by applying the first feature data to a first neural network; obtaining probability data by applying the second feature data to a second neural network; modifying the probability data based on one of a plurality of predetermined quantization steps; obtaining quantized first feature data by quantizing the first feature data according to the quantization step; and generating a bitstream including bits corresponding to the quantized first feature data and the quantization index by applying entropy encoding based on the modified probability data for the quantized first feature data and applying entropy encoding to the quantization index corresponding to the quantization step.

In an embodiment of the present disclosure, the bitstream may include bits corresponding to the second feature data.

According to an embodiment of the present disclosure, the image encoding method may address a mismatch between training data and test data, which is likely to occur in a neural network for image encoding trained or optimized for large quantization errors by using one of a plurality of quantization steps determined in advance through RDO calculation.

Furthermore, in an embodiment of the present disclosure, the image encoding method may efficiently quantize and entropy encode feature data generated by AI based encoding of an image.

Moreover, in an embodiment of the present disclosure, the image encoding method may reduce the bitrate of a bitstream and enhance the quality of a restored image.

In an embodiment of the present disclosure, the size of the quantization step indicated by the quantization index may be 1 or greater.

According to an embodiment of the present disclosure, the image encoding method may resolve the mismatch by using less-precise quantization.

In an embodiment of the present disclosure, the quantization index may indicate one of the plurality of quantization steps included in a predetermined quantization list.

According to an embodiment of the disclosure, the image encoding method may reduce the time required for RDO calculation by selecting one quantization step from among the plurality of quantization steps included in the predetermined quantization list.

In an embodiment of the present disclosure, the image encoding method may further include obtaining quantized data by applying the second feature data to a third neural network, wherein the probability data may be modified based on sample values of the quantized data and the quantization step, and the first feature data may be quantized based on the sample values of the quantized data and the quantization step.

In an embodiment of the present disclosure, final quantization step values may be obtained by multiplying the sample values of the quantized data and the quantization step, and the probability data may be modified based on the final quantization step values.

According to an embodiment of the present disclosure, the image encoding method may resolve the mismatch and improve the quality of the restored image by adaptive quantization for each sample of each feature data.

In an embodiment of the present disclosure, sample values of the modified probability data may represent probabilities of values that the samples of the quantized first feature data may have.

In an embodiment of the present disclosure, the sample values of the modified probability data may represent means and standard deviations corresponding to samples of the quantized first feature data.

In an embodiment of the present disclosure, probabilities of values that samples of the quantized first feature data may have may be derived by applying the means and standard deviations represented by the sample values of the modified probability data to a predetermined probability model.

In an embodiment of the present disclosure, the modifying of the probability data may include dividing the sample values of the probability data by the quantization step.

In an embodiment of the present disclosure, a plurality of probability data and a plurality of weights may be obtained by applying the second feature data to the second neural network, the plurality of probability data may be modified based on the quantization step, and a probability of a value that a sample of the quantized first feature data may have may be determined by combining the plurality of modified probability data according to the plurality of weights.

According to an embodiment of the present disclosure, the image encoding method may perform entropy encoding more effectively by modifying the probability data for feature data.

In an embodiment of the present disclosure, the first feature data may include the feature data k obtained by applying the current image 100 to the image encoder 12, the feature data w obtained by applying the current image 100 and the previously restored image 200 to the optical flow encoder 42 or the feature data v obtained by applying the residual image r corresponding to the current image 100 to the residual encoder 52.

According to an embodiment of the present disclosure, the image encoding method may restore the current image more efficiently through neural network based encoding.

According to an embodiment of the present disclosure, an image encoding device may include memory storing one or more instructions and at least one processor configured to operate according to the one or more instructions. The at least one processor may be configured to obtain, for first feature data obtained through neural network based encoding of a current image, second feature data by applying the first feature data to a first neural network. The at least one processor may be configured to obtain probability data by applying the second feature data to a second neural network. The at least one processor may be configured to modify the probability data based on one of the plurality of predetermined quantization steps. The at least one processor may be configured to obtain quantized first feature data by quantizing the first feature data according to the quantization step. The at least one processor may be configured to generate a bitstream including bits corresponding to the quantized first feature data and the quantization index by applying entropy encoding based on the modified probability data for the quantized first feature data and applying entropy encoding to the quantization index corresponding to the quantization step.

In an embodiment of the present disclosure, the bitstream may include bits corresponding to the second feature data.

According to an embodiment of the present disclosure, the image encoding device may address a mismatch between training data and test data, which is likely to occur in a neural network for image encoding trained or optimized for large quantization errors by using one of a plurality of quantization steps determined in advance through RDO calculation.

Furthermore, in an embodiment of the present disclosure, the image encoding device may efficiently quantize and entropy encode feature data generated by AI based encoding of an image.

Moreover, in an embodiment of the present disclosure, the image encoding device may reduce the bitrate of the bitstream and enhance the quality of a restored image.

In an embodiment of the present disclosure, the size of the quantization step indicated by the quantization index may be 1 or greater.

According to an embodiment of the present disclosure, the image encoding device may resolve the mismatch by using less-precise quantization.

In an embodiment of the present disclosure, the quantization index may indicate one of the plurality of quantization steps included in a predetermined quantization list.

According to an embodiment of the disclosure, the image encoding device may reduce the time required for RDO calculation by selecting one quantization step from among the plurality of quantization steps included in the predetermined quantization list.

In an embodiment of the present disclosure, the at least one processor of the image encoding device may be configured to obtain quantized data by applying the second feature data to a third neural network. The probability data may be modified based on sample values of the quantized data and the quantization step, and the first feature data may be quantized based on the sample values of the quantized data and the quantization step.

In an embodiment of the present disclosure, final quantization step values may be obtained by multiplying the sample values of the quantized data and the quantization step, and the probability data may be modified based on the final quantization step values.

According to an embodiment of the present disclosure, the image encoding device may resolve the mismatch and improve the quality of the restored image by adaptive quantization for each sample of each feature data.

In an embodiment of the present disclosure, sample values of the modified probability data may represent probabilities of values that the samples of the quantized first feature data may have.

In an embodiment of the present disclosure, the sample values of the modified probability data may represent means and standard deviations corresponding to samples of the quantized first feature data.

In an embodiment of the present disclosure, probabilities of values that samples of the quantized first feature data may have may be derived by applying the means and standard deviations represented by the sample values of the modified probability data to a predetermined probability model.

In an embodiment of the present disclosure, the modifying of the probability data may include dividing the sample values of the probability data by the quantization step.

In an embodiment of the present disclosure, a plurality of probability data and a plurality of weights may be obtained by applying the second feature data to the first neural network, the plurality of probability data may be modified based on the quantization step, and a probability of a value that a sample of the quantized first feature data may have may be determined by combining the plurality of modified probability data according to the plurality of weights.

According to an embodiment of the present disclosure, the image encoding device may perform entropy encoding more effectively by modifying probability data for feature data.

In an embodiment of the present disclosure, the first feature data may include the feature data k obtained by applying the current image 100 to the image encoder 12, the feature data w obtained by applying the current image 100 and the previously restored image 200 to the optical flow encoder 42 or the feature data v obtained by applying the residual image r corresponding to the current image 100 to the residual encoder 52.

According to an embodiment of the present disclosure, the image encoding device may restore the current image more efficiently through neural network based encoding.

The machine-readable storage medium may be provided in the form of a non-transitory storage medium. The term 'non-transitory storage medium' may mean a tangible device without including a signal, e.g., electromagnetic waves, and may not distinguish between storing data in the storage medium semi-permanently and temporarily. For example, the non-transitory storage medium may include a buffer that temporarily stores data.

In an embodiment of the present disclosure, the aforementioned method according to the various embodiments of the disclosure may be provided in a computer program product. The computer program product may be a commercial product that may be traded between a seller and a buyer. The computer program product may be distributed in the form of a machine-readable storage medium (e.g., a compact disc read only memory (CD-ROM)) or distributed directly between two user devices (e.g., smart phones) or online (e.g., downloaded or uploaded) through an application store. In the case of the online distribution, at least part of the computer program product (e.g., a downloadable app) may be at least temporarily stored or arbitrarily created in a storage medium that may be readable to a device such as a server of the manufacturer, a server of the application store, or a relay server.

**Claims**

1. An image decoding method comprising:

    obtaining, from a bitstream, second feature data for first feature data obtained through neural network-based encoding for a current image (100) and a quantization index indicating one of a plurality of quantization steps (S1710);
    obtaining the quantization step based on the quantization index (S1720);
    obtaining probability data (S1730) by applying the second feature data to a first neural network (330);
    modifying the probability data based on the quantization step (S1740);
    obtaining quantized first feature data (S1750) by applying entropy decoding based on the modified probability data to bits included in the bitstream;
    obtaining dequantized first feature data (S1760) by dequantizing the quantized first feature data according to the quantization step; and
    restoring the current image by neural network-based decoding of the dequantized first feature data (S1770).

2. The image decoding method of claim 1, wherein a size of the quantization step indicated by the quantization index is 1 or greater.

3. The image decoding method of claim 1 or 2, wherein the quantization index indicates one of a plurality of quantization steps included in a predetermined quantization list.

4. The image decoding method of any one of claims 1 to 3, further comprising:

    obtaining quantized data by applying the second feature data to a second neural network (410),
    wherein the probability data is modified based on sample values of the quantized data and the quantization step, and
    wherein the quantized first feature data is dequantized based on the sample values of the quantized data and the quantization step.

5. The image decoding method of claim 4, wherein final quantization step

    values are obtained by multiplying the sample values of the quantized data and the quantization step, and
    the probability data is modified based on the final quantization step values.

6. The image decoding method of claim 4, wherein the quantized data comprises a quantization parameter or a quantization step size as a sample.

7. The image decoding method of any one of claims 1 to 6, wherein a sample value of the modified probability data represents a probability of a value that a sample of the quantized first feature data is likely to have.

8. The image decoding method of any one of claims 1 to 7, wherein a sample value of the modified probability data represents a mean and a standard deviation corresponding to a sample of the quantized first feature data.

9. The image decoding method of any one of claims 1 to 8, wherein
    a probability of a value that a sample of the quantized first feature data is likely to have is derived by applying a mean and a standard deviation represented by a sample value of the modified probability data to a predetermined probability model.

10. The image decoding method of any one of claims 1 to 9, wherein the modifying of the probability data comprises dividing sample values of the probability data by the quantization step.

11. The image decoding method of any one of claims 1 to 10, wherein the first feature data comprises feature data (k) obtained by applying the current image (100) to an image encoder (12), feature data (w) obtained by applying the current image (100) and a previously restored image (200) to an optical flow encoder (42) or feature data (v) obtained by applying a residual image (r) corresponding to the current image (100) to a residual encoder (52).

12. The image decoding method of any one of claims 1 to 11, wherein: a plurality of probability data and a plurality of weights are obtained by applying the second feature data to the first neural network (330),

    the plurality of probability data is modified based on the quantization step, and
    a probability of a value that a sample of the quantized first feature data is likely to have is determined by combining the plurality of modified probability data according to the plurality of weights.

13. An image encoding method comprising:

    obtaining second feature data (S2310) for first feature data obtained through neural network-based encoding of a current image (100) by applying the first feature data to a first neural network (310);
    obtaining probability data (S2320) by applying the second feature data to a second neural network (330);
    modifying the probability data based on one of a plurality of predetermined quantization steps (S2330);
    obtaining quantized first feature data (S2340) by quantizing the first feature data according to the quantization step; and
    generating a bitstream including bits corresponding to the quantized first feature data and the quantization index (S2350) by applying entropy encoding based on the modified probability data to the quantized first feature data and applying entropy encoding to the quantization index corresponding to the quantization step,
    wherein the bitstream comprises bits corresponding to the second feature data.

14. The image encoding method of claim 13, wherein a size of the quantization step indicated by the quantization index is 1 or greater.

**15.** The image encoding method of claim 13 or 14, wherein the quantization index indicates one of a plurality of quantization steps included in a predetermined quantization list.

# FIG. 1

300
CURRENTLY RESTORED IMAGE

14
IMAGE DECODER

K'

24
DEQUANTIZE

34
ENTROPY DECODING

BITSTREAM

32
ENTROPY ENCODING

22
QUANTIZE

K

12
IMAGE ENCODER

100
CURRENT IMAGE

# FIG. 2

# FIG. 3

PROBABILITY DATA ←─── PROBABILITY NEURAL NETWORK ─330─←

FIRST FEATURE DATA ───→ HYPERPRIOR ENCODER ─310─

SECOND FEATURE DATA

# FIG. 4

# FIG. 5

# FIG. 6

# FIG. 7

# FIG. 8

810

| μ(0,0) | μ(0,1) |
|--------|--------|
| μ(1,0) | μ(1,1) |

830

| σ(0,0) | σ(0,1) |
|--------|--------|
| σ(1,0) | σ(1,1) |

850

| q(0,0) | q(0,1) |
|--------|--------|
| q(1,0) | q(1,1) |

870

| μ(0,0)/q(0,0) | μ(0,1)/q(0,1) |
|---------------|---------------|
| μ(1,0)/q(1,0) | μ(1,1)/q(1,1) |

890

| σ(0,0)/q(0,0) | σ(0,1)/q(0,1) |
|---------------|---------------|
| σ(1,0)/q(1,0) | σ(1,1)/q(1,1) |

# FIG. 9

|  | LAPLACIAN | GAUSSIAN |
|---|---|---|
| PROBABILITY DATA | Means: $\mu$<br>Standard dev.: $\sigma$ | |
| MODIFIED PROBABILITY DATA | Means: $\mu' = \mu/q$<br>Standard dev.: $\sigma' = \sigma/q$ | |
| PROBABILITY MODEL | $p(x\|\mu,\sigma)=\dfrac{1}{\sqrt{2}\,\sigma'}e^{-\frac{1}{2}\left(\frac{x-\mu'}{\sigma'}\right)^2}$ | $p(x\|\mu,\sigma)=\dfrac{1}{\sigma'\sqrt{2\pi}}e^{-\frac{1}{2}\left(\frac{x-\mu'}{\sigma'}\right)^2}$ |

# FIG. 10

1010-1

| μ1(0,0) | μ1(0,1) |
|---------|---------|
| μ1(1,0) | μ1(1,1) |

1070-1

| μ1(0,0)/q(0,0) | μ1(0,1)/q(0,1) |
|----------------|----------------|
| μ1(1,0)/q(1,0) | μ1(1,1)/q(1,1) |

1010-2

| μ2(0,0) | μ2(0,1) |
|---------|---------|
| μ2(1,0) | μ2(1,1) |

1070-2

| μ2(0,0)/q(0,0) | μ2(0,1)/q(0,1) |
|----------------|----------------|
| μ2(1,0)/q(1,0) | μ2(1,1)/q(1,1) |

⋮

1010-N

| μN(0,0) | μN(0,1) |
|---------|---------|
| μN(1,0) | μN(1,1) |

⋮

1070-N

| μN(0,0)/q(0,0) | μN(0,1)/q(0,1) |
|----------------|----------------|
| μN(1,0)/q(1,0) | μN(1,1)/q(1,1) |

1050

| q(0,0) | q(0,1) |
|--------|--------|
| q(1,0) | q(1,1) |

# FIG. 11

| | LAPLACIAN | GAUSSIAN |
|---|---|---|
| PROBABILITY DATA | Means: $\mu = (\mu_1, ..., \mu_N)$<br>Standard dev.: $\sigma = (\sigma_1, ..., \sigma_N)$<br>weights: $w_n = (w_1, ..., w_N)$ | |
| MODIFIED PROBABILITY | Means: $\mu_n = (\mu_1/q, ..., \mu_N/q)$<br>Standard dev.: $\sigma_n = (\sigma_1/q, ..., \sigma_N/q)$ | |
| PROBABILITY MODEL | $p(x\|w,\mu,\sigma) = \sum_{n=1,...,N} \dfrac{w_n}{\sqrt{2}\sigma_n} e^{-\frac{\sqrt{2}\|x-\mu_n\|}{\sigma_n}}$ | $p(x\|w,\mu,\sigma) = \dfrac{w_n}{\sigma_n\sqrt{2\pi}} e^{-\frac{1}{2}\left(\frac{x-\mu_n}{\sigma_n}\right)^2}$ |

# FIG. 12

## FIG. 13

BITSTREAM → **ENTROPY DECODER** /1310 → QUANTIZED FIRST FEATURE DATA, QUANTIZED SECOND FEATURE DATA → **DEQUANTIZER** /1330 → DEQUANTIZED FIRST FEATURE DATA

OBTAINER /1210

DEQUANTIZED SECOND FEATURE DATA

QUANTIZATION STEP

QUANTIZED SECOND FEATURE DATA

MODIFIED PROBABILITY DATA

QUANTIZATION INDEX

**AI CONTROLLER** /1350

EP 4 753 259 A1

## FIG. 14

EP 4 753 259 A1

**FIG. 15**

EP 4 753 259 A1

# FIG. 16

# FIG. 17

START

OBTAIN SECOND FEATURE DATA FOR FIRST FEATURE DATA
OBTAINED THROUGH NEURAL NETWORK BASED ENCODING
OF CURRENT IMAGE AND QUANTIZATION INDEX INDICATING
ONE OF PLURALITY OF QUANTIZATION STEPS FROM BITSTREAM — S1710

OBTAIN QUANTIZATION STEP BASED ON QUANTIZATION INDEX — S1720

OBTAIN PROBABILITY DATA BY APPLYING SECOND
FEATURE DATA TO FIRST NEURAL NETWORK — S1730

MODIFY PROBABILITY DATA BASED ON QUANTIZATION STEP — S1740

OBTAIN QUANTIZED FIRST FEATURE DATA BY APPLYING
ENTROPY DECODING BASED ON MODIFIED PROBABILITY
DATA TO BITS INCLUDED IN BITSTREAM — S1750

OBTAIN DEQUANTIZED FIRST FEATURE DATA BY DEQUANTIZING
QUANTIZED FIRST FEATURE DATA ACCORDING TO
QUANTIZATION STEP — S1760

RESTORE CURRENT IMAGE THROUGH NEURAL NETWORK
BASED DECODING OF DEQUANTIZED FIRST FEATURE DATA — S1770

END

# FIG. 18

CURRENT IMAGE /100 → PREDICTIVE ENCODER /1810 → (FIRST FEATURE DATA) → GENERATOR /1820 → BITSTREAM → OBTAINER /1830 → (DEQUANTIZED FIRST FEATURE DATA) → DEQUANTIZER /1840 → CURRENTLY RESTORED IMAGE /300

1800

EP 4 753 259 A1

FIG. 19

EP 4 753 259 A1

# FIG. 20

EP 4 753 259 A1

**FIG. 21**

## FIG. 22

# FIG. 23

START

OBTAIN SECOND FEATURE DATA FOR FIRST FEATURE DATA OBTAINED THROUGH NEURAL NETWORK BASED ENCODING OF CURRENT IMAGE BY APPLYING FIRST FEATURE DATA TO FIRST NEURAL NETWORK — S2310

OBTAIN PROBABILITY DATA BY APPLYING SECOND FEATURE DATA TO SECOND NEURAL NETWORK — S2320

MODIFY PROBABILITY DATA BASED ON ONE OF PLURALITY OF PREDETERMINED QUANTIZATION STEPS — S2330

OBTAIN QUANTIZED FIRST FEATURE DATA BY QUANTIZING FIRST FEATURE DATA ACCORDING TO QUANTIZATION STEP — S2340

GENERATE BITSTREAM INCLUDING BITS CORRESPONDING TO QUANTIZED FIRST FEATURE DATA AND QUANTIZATION INDEX BY APPLYING ENTROPY DECODING BASED ON MODIFIED PROBABILITY DATA TO QUANTIZED FIRST FEATURE DATA AND APPLYING ENTROPY ENCODING TO QUANTIZATION INDEX CORRESPONDING TO QUANTIZATION STEP — S2350

END

# FIG. 24

CURRENT TRAINING IMAGE ———————————→ COMPARE ——→ SECOND LOSS INFORMATION

2410

NEURAL NETWORK BASED ENCODING

2490

CURRENT RESTORATION TRAINING IMAGE

FIRST FEATURE DATA

2470

NEURAL NETWORK BASED DECODING

310

HYPERPRIOR ENCODER

DEQUANTIZED FIRST FEATURE DATA

SECOND FEATURE DATA

2460

DEQUANTIZING

330

PROBABILITY NEURAL NETWORK

QUANTIZED FIRST FEATURE DATA

2450

ENTROPY DECODING

PROBABILITY DATA

2010

QUANTIZATION STEP

2420

MODIFYING

2430

QUANTIZING

MODIFIED PROBABILITY DATA

QUANTIZED FIRST FEATURE DATA

2440

ENTROPY ENCODING ——→ BITSTREAM

2480

FIRST LOSS INFORMATION

# FIG. 25

CURRENT TRAINING IMAGE ——————————→ ( COMPARE ) → SECOND LOSS INFORMATION

2410

**NEURAL NETWORK BASED ENCODING**

FIRST FEATURE DATA

2590

CURRENT RESTORATION TRAINING IMAGE

2570

**NEURAL NETWORK BASED DECODING**

DEQUANTIZED FIRST FEATURE DATA

310

**HYPERPRIOR ENCODER**

SECOND FEATURE DATA

2010

QUANTIZATION STEP

330

**PROBABILITY NEURAL NETWORK**

410

**QUANTIZATION NEURAL NETWORK**

2560

**DEQUANTIZING**

QUANTIZED FIRST FEATURE DATA

QUANTIZED DATA

2210 ⊗

PROBABILITY DATA

FINAL QUANTIZATION STEP VALUES

2550

**ENTROPY DECODING**

2520

**MODIFYING**

2530

**QUANTIZING**

MODIFIED PROBABILITY DATA

QUANTIZED FIRST FEATURE DATA

2540

**ENTROPY ENCODING** → BITSTREAM

2580

**FIRST LOSS INFORMATION**

## INTERNATIONAL SEARCH REPORT

| International application No. |
|---|
| **PCT/KR2024/012351** |

### A. CLASSIFICATION OF SUBJECT MATTER

**H04N 19/124**(2014.01)i; **H04N 19/196**(2014.01)i; **H04N 19/70**(2014.01)i; **H04N 19/132**(2014.01)i; **G06N 3/045**(2023.01)i; **G06N 3/08**(2006.01)i

According to International Patent Classification (IPC) or to both national classification and IPC

### B. FIELDS SEARCHED

Minimum documentation searched (classification system followed by classification symbols)

H04N 19/124(2014.01); G06N 3/02(2006.01); G06N 3/045(2023.01); G06N 3/0455(2023.01); G06N 3/0495(2023.01); H04N 19/18(2014.01); H04N 19/90(2014.01); H04N 19/91(2014.01); H04N 19/94(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), 양자화(quantization), 신경망(neural network), 확률(probability), 엔트로피(entropy), 스텝(step), 인덱스(index)

### C. DOCUMENTS CONSIDERED TO BE RELEVANT

| Category* | Citation of document, with indication, where appropriate, of the relevant passages | Relevant to claim No. |
|---|---|---|
| Y | WO 2023-154590 A1 (QUALCOMM INCORPORATED) 17 August 2023 (2023-08-17) See paragraphs [0002], [0030], [0035], [0048], [0062]-[0069], [0071]-[0083] and [0115]-[0119]; and figures 1-2, 5-6 and 14. | 1-15 |
| Y | KR 10-2022-0051015 A (TENCENT AMERICA LLC) 25 April 2022 (2022-04-25) See claim 1. | 1-15 |
| Y | KR 10-2023-0107869 A (INTELLECTUAL DISCOVERY CO., LTD.) 18 July 2023 (2023-07-18) See paragraphs [0001] and [0060]-[0068]; and figures 3-5. | 4-6 |
| A | WO 2023-131641 A1 (FRAUNHOFER-GESELLSCHAFT ZUR FORDERUNG DER ANGEWANDTEN FORSCHUNG E.V.) 13 July 2023 (2023-07-13) See claims 1-22. | 1-15 |
| A | WO 2023-118317 A1 (DEEP RENDER LTD.) 29 June 2023 (2023-06-29) See claims 1-8. | 1-15 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **19 November 2024** | **19 November 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/012351**

| Patent document cited in search report | | | Publication date (day/month/year) | Patent family member(s) | | | Publication date (day/month/year) |
|---|---|---|---|---|---|---|---|
| WO | 2023-154590 | A1 | 17 August 2023 | KR | 10-2024-0149890 | A | 15 October 2024 |
| | | | | US | 2023-0262267 | A1 | 17 August 2023 |
| KR | 10-2022-0051015 | A | 25 April 2022 | CN | 114375571 | A | 19 April 2022 |
| | | | | CN | 114375571 | B | 04 June 2024 |
| | | | | CN | 118646894 | A | 13 September 2024 |
| | | | | EP | 4000255 | A1 | 25 May 2022 |
| | | | | JP | 2023-505950 | A | 14 February 2023 |
| | | | | JP | 2024-059893 | A | 01 May 2024 |
| | | | | JP | 7447258 | B2 | 11 March 2024 |
| | | | | KR | 10-2686757 | B1 | 19 July 2024 |
| | | | | US | 11381830 | B2 | 05 July 2022 |
| | | | | US | 11711532 | B2 | 25 July 2023 |
| | | | | US | 11882301 | B2 | 23 January 2024 |
| | | | | US | 2021-0392355 | A1 | 16 December 2021 |
| | | | | US | 2022-0150519 | A1 | 12 May 2022 |
| | | | | US | 2022-0303563 | A1 | 22 September 2022 |
| | | | | WO | 2021-252010 | A1 | 16 December 2021 |
| KR | 10-2023-0107869 | A | 18 July 2023 | US | 2023-0421764 | A1 | 28 December 2023 |
| | | | | WO | 2022-108361 | A1 | 27 May 2022 |
| WO | 2023-131641 | A1 | 13 July 2023 | CN | 118844060 | A | 25 October 2024 |
| | | | | EP | 4460967 | A1 | 13 November 2024 |
| | | | | KR | 10-2024-0132484 | A | 03 September 2024 |
| WO | 2023-118317 | A1 | 29 June 2023 | EP | 4454281 | A1 | 30 October 2024 |
| | | | | US | 11599972 | B1 | 07 March 2023 |

Form PCT/ISA/210 (patent family annex) (July 2022)